# EUROPEAN PATENT SPECIFICATION

(11) **EP 2 587 730 B1**
(45) Date of publication and mention of the grant of the patent: **24.04.2019**
(21) Application number: 11798412.0
(22) Date of filing: 24.06.2011
(51) Int. Cl.: G06Q 10/06, G06Q 50/06, H02J 13/00, H02J 3/14, H04L 12/24, H04L 12/12, H02J 9/00

(54) **NETWORK SYSTEM**
NETZWERKSYSTEM
SYSTÈME RÉSEAU

(30) Priority: 20.05.2011 KR 20110047838; 26.11.2010 WO PCT/IB2010/003388; 25.06.2010 KR 20100060590
(43) Date of publication of application: 01.05.2013
(60) Divisional application: 19155798.2
(73) Proprietor: LG Electronics Inc., SEOUL, 07336 (KR)
(72) Inventor: AHN, Junho, Changwon City Gyeongnam-do 641-711 (KR); KIM, Yanghwan, Changwon City Gyeongnam-do 641-711 (KR); LEE, Hoonbong, Changwon City Gyeongnam-do 641-711 (KR); LEE, Koonseok, Changwon City Gyeongnam-do 641-711 (KR); JANG, Bongmun, Changwon City Gyeongnam-do 641-711 (KR); LEE, Wookjin, Changwon City Gyeongnam-do 641-711 (KR); SEO, Moonseok, Changwon City Gyeongnam-do 641-711 (KR); SEO, Daegeun, Changwon City Gyeongnam-do 641-711 (KR)
(74) Representative: Ter Meer Steinmeister & Partner
(86) International application number: PCT/KR2011/004642
(87) International publication number: WO 2011/162577

(56) References cited:
- KR-A- 20070 098 172
- KR-A- 20090 046 543
- US-A1- 2005 138 929
- US-A1- 2007 239 317
- US-A1- 2008 106 146
- US-A1- 2010 089 909

## Description

### Cross-reference to related applications

### TECHNICAL FIELD

The present disclosure relates to a network system.

### BACKGROUND ART

A provider has simply provided energy sources such as electricity, water and gas while a consumer has simply used the supplied energy sources. This makes difficult to realize efficient management in terms of the generation, distribution and use of energy. Therefore, a network system for effectively managing energy is in need.

US 2010/0089909 A1 relates to energy management of household appliances. A microwave oven comprises a cooking cavity and a RF generation module configured to deliver microwave energy into the cooking cavity. A controller is operatively associated with the RF generation module. The controller receives and processes a signal indicative of current state of an associated energy supplying utility for determining whether to operate the microwave oven in one of a normal operating mode and an energy savings mode in response to the received signal. The controller is configured to at least temporarily block the signal when the RF generation module is activated if a frequency of the signal is at least partially degraded by a frequency of the RF generation module.

US 2008/0106146 A1 relates to a management system for in-house power consumption, more particularly to a management system for in-house power consumption efficiently performing in-house power consumption by means of estimating power consumption of each operation of in-house electric devices. A management system for in-house power consumption comprises: at least one or more electric which comprise a communication means and transmit current operation information via the communication means on a given network; an power sensor module that measures an instantaneous power consumption of the total electric devices and transmit it on the network; and a power consumption controller that saves a previously received the operation information and the instantaneous power consumption and estimates the power consumption of each electric device on the basis of the saved operation information and instantaneous power consumption and the currently received operation information and instantaneous power consumption.

### DISCLOSURE OF THE INVENTION

### TECHNICAL PROBLEM

Embodiments provide a network system capable of effectively managing energy sources.

### TECHNICAL SOLUTION

In one embodiment, a network system comprises the features of claim 1.

The details of one or more embodiments are set forth in the accompanying drawings and the description below. Other features will be apparent from the description and drawings, and from the claims.

### ADVANTAGEOUS EFFECTS

According to embodiments, an energy source can be efficiently produced, used, distributed, and stored, thus enabling the effective management of the energy source.

Also, by using energy information, in-house electric products can be driven and controlled. The energy usage cost and power consumption can be reduced.

### BRIEF DESCRIPTION OF THE DRAWINGS

Fig. 1 is a view schematically showing an example of a network system according to the present disclosure.
Fig. 2 is a block diagram schematically showing an example of the network system according to the present disclosure.
Fig. 3 is a block diagram showing an information transmission process on the network system according to the present disclosure.
Fig. 4 is a view showing the communication structure of two components that constitute the network system according to a first embodiment.
Fig. 5 is a block diagram showing the detailed configuration of a communication device that constitutes a communication unit.
Fig. 6 is a view showing a communication performing process between a specific component and a communication device according to the first embodiment .
Fig. 7 is a view showing a communication performing process between a specific component and a communication device according to a second embodiment.
Fig. 8 is a view showing the communication structure of components that constitute the network system according to a third embodiment.
Fig. 9 is a block diagram showing the detailed configuration of a first component in Fig. 8.
Fig. 10 is a view showing the communication structure of components that constitute the network system according to a fourth embodiment.
Fig. 11 is a block diagram showing the detailed configuration of a first component in Fig. 10.
Fig. 12 is a block diagram showing an example an example of a component that constitutes the network system of the present disclosure.
Fig. 13 is a schematic view illustrating a home network according to an embodiment.
Fig. 14 is a block diagram illustrating a configuration of an electrical product according to an embodiment of the present invention.
Fig. 15 is a flowchart illustrating a control method of an electrical product according to an embodiment of the present invention.
Fig. 16 is a flowchart illustrating a control method of an electrical product according to another embodiment of the present invention.
Fig. 17 is a block diagram illustrating a configuration of an electrical product according to another embodiment of the present invention.
Fig. 18 is a flowchart illustrating a control method of an electrical product according to another embodiment of the present invention.
Fig. 19 is a flowchart illustrating a control method of an electrical product according to another embodiment of the present invention.
Fig. 20 is a view when power information is used for a control method of an electrical product according to an embodiment of the present invention.
Fig. 21 and 22 are flowcharts illustrating a control method of an electrical product according to an embodiment of the present invention.
Fig. 23 and 24 are flowcharts illustrating a control method of electrical product according to another embodiment of the present invention.

### BEST MODE FOR CARRYING OUT THE INVENTION

Reference will now be made in detail to the embodiments of the present disclosure, examples of which are illustrated in the accompanying drawings.

Reference will now be made in detail to the embodiments of the present disclosure, examples of which are illustrated in the accompanying drawings.

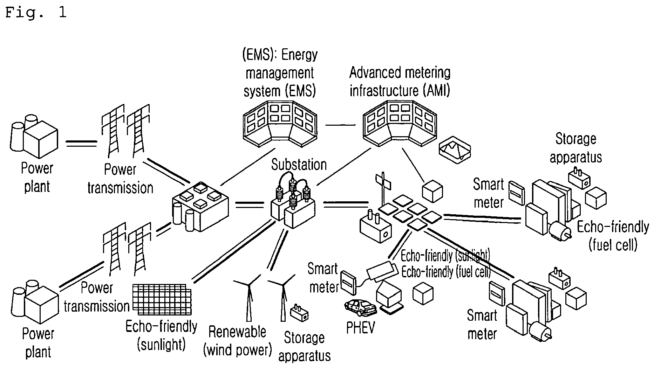

Fig. 1 is a view schematically showing an example of a network system according to the present disclosure.

The network system is a system for managing an energy source such as electricity, water or gas. The energy source means one of which amount generated or used can be metered. Therefore, even a source not mentioned above may be used as the energy source. Hereinafter, electricity will be described as an example of the energy source, and details of this specification may be identically applied to other energy sources.

Referring to Fig. 1, a network system according to an embodiment includes a power plant for producing electricity. The power plant may include a power plant for producing electricity through a thermal power generation or nuclear power generation and a power plant using water power, sunlight power, wind power or the like which is eco-friendly energy.

The electricity produced in the power plant is transmitted to a sub-control center through a power transmission line, and the sub-control center transmits the electricity to a substation so that the electricity is distributed to customers such as houses or offices.

Electricity produced by the eco-friendly energy is also transmitted to the substation so as to be distributed to each of the customers. The electricity transmitted from the substation is distributed to each of the offices or houses through electricity power storage, or is directly distributed to each of the offices or houses.

In a house using a home area network (HAN), electricity may be produced by itself through sunlight, fuel cells built in a plug-in hybrid electric vehicle (PHEV), or the like. Also, the produced electricity may be stored or distributed, or surplus electricity may be resold to the outside world.

The network system may include a smart meter for detecting the amount of electricity used in each customer (house, office or the like) in real time, and an advanced metering infrastructure (AMI) for metering the amount of electricity used in a plurality of customers.

The network system may further include an energy management system (EMS) for managing energy. The EMS may generate information on operations of one or more components with respect to energy (production of energy, distribution of energy, usage of energy, storage of energy, and the like). The EMS may generate at least a command for the operations of the components.

In this specification, a function or solution performed by the EMS may be referred to as an energy management function or energy management solution.

In the network system, one or more EMSs may be provided as a separate configuration, or the EMS may be included as an energy management function or energy management solution in one or more components.

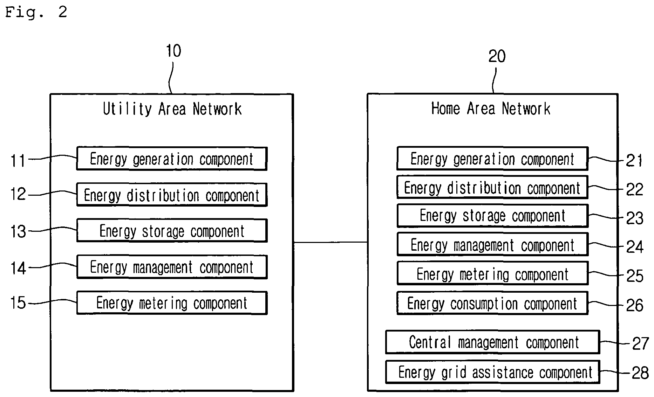

Fig. 2 is a block diagram schematically showing an example of the network system according to the present disclosure.

Referring to Figs. 1 and 2, the network system according to the present disclosure is configured by a plurality of components. For example, the components of the network system are a power plant, a substation, a sub-control center, an EMS, electric home appliances, a smart meter, a storage battery, a web server, an AMI, a home server, and the like.

In the present disclosure, each of the components may be configured by a plurality of sub-components. As an example, in a case of one component is an electric home appliance, sub-components may be a microcomputer (MICOM), a heater, a display and the like. That is, all that perform a specific function may be components in the present disclosure, and such components constitute the network system of the present disclosure. Two components may communicate with each other by means of a communication unit. One network may be one component or may be configured by a plurality of components.

In this specification, the network system in which communication information is related to an energy source may be referred to as an energy grid.

A network system according to an embodiment may include a utility area network (UAN) 10 and a home area network (HAN) 20. The UAN 10 and the HAN 20 may perform wired or wireless communication by means of a communication unit, and may perform two-way communication.

In this specification, the term "home" means not only a household as a lexical meaning but also a group in which specific components such as buildings or companies gather. Also, the term "utility" means a group in which specific components outside the home gather.

The UAN 10 includes an energy generation component 11 for generating energy, an energy distribution component 12 for distributing or transmitting energy, an energy storage component 13 for storing energy, an energy management component 14 for managing energy, and an energy metering component 15 for metering information related to energy.

In a case where one or more components that constitute the UAN 10 consume energy, the components that consume the energy may be energy consumption components.

The energy consumption component is a component corresponding to the energy consumption component 26 that constitutes the HAN 20. The energy consumption component may be the same component as the energy consumption component 26 or may be another component distinguished from the energy consumption component 26.

The energy generation component 11 may be a power plant as an example. The energy distribution component 12 distributes or transmits energy generated in the energy generation component 11 and/or energy stored in the energy storage component 13 to the energy consumption component 26 that consumes the energy. The energy distribution component 12 may be a power transmitter, substation, sub-control center, or the like.

The energy storage component 13 may be a storage battery, and the energy management component 14 generates information for driving one or more of the energy generation component 11, the energy distribution component 12, the energy storage component 13 and the energy consumption component 26, related to energy. The energy management component 14 may generate at least a command for the operation of a specific component.

The energy management component 14 may be an EMS. The energy metering component 15 may meter information related to the generation of energy, the distribution of energy, the usage of energy, the storage of energy, and the like. The energy metering component 15 may be an AMI as an example. The energy management component 14 may be a separate configuration, or may be included in another component as an energy management function.

The UAN 10 may communicate with the HAN 20 by a terminal component (not shown). That is, information generated or transferred in a specific component that constitutes the UAN 10 may be transmitted to the HAN 20 through the terminal component, or information generated or transferred in another component that constitutes the HAN 20 may be received to the UAN 10 through the terminal component. The terminal component may be a gate way as an example. The terminal component may be provided to one or more of the UAN 10 and the HAN 20.

The terminal component may be a component necessary for transmitting/receiving information between the UAN and the HAN.

Two components that constitute the UAN 10 may communicate with each other by means of a communication unit.

The HAN 20 includes an energy generation component 21 for generating energy, an energy distribution component 22 for distributing energy, an energy storage component 23 for storing energy, an energy management component 24 for managing energy, an energy metering component 25 for metering information related to energy, an energy consumption component 26 for consuming energy, a central management component 27 for controlling a plurality of components, and an energy grid assistance component 28.

The energy generation component 21 may be a home power generator, and the energy storage component 23 may be a storage battery. The energy management component 24 may be an EMS. As an example, the energy generation component 21 may be a solar cell, a fuel cell, a wind power generator, a power generator using subterranean heat, a power generator usng seawater, or the like.

The energy storage component 23 may perform storage using energy generated from the energy generation component 21. Therefore, in view of the use of energy, the energy storage component 23 and the energy generation component 11 may be an energy using component that uses energy together with the energy consumption component 26. That is, the energy using component may include at least an energy consumption component, an energy generation component and an energy storage component. In a case where the energy management component uses energy, it may be included in the energy using component.

In view of the supplied energy, the energy storage component 23, the energy consumption component and the energy generation component 11 may be an energy supplied component to which energy is supplied.

The energy metering component 25 may meter information related to the generation of energy, the distribution of energy, the usage of energy, the storage of energy, and the like. The energy metering component 25 may be a smart meter as an example. The energy consumption component 26 may be, as an example, an electric home appliance or a heater, motor, display or the like, which constitutes the electric home appliance. In this embodiment, there is no limitation in the kind of the energy consumption component 26.

Specifically, the energy generation component 21 may be another component of the UAN 10, which generates energy to be supplied to the HAN 20.

The energy management component 24 may be provided as a separate configuration or may be included in another component as an energy management function. As an example, the energy management function may be performed by a control component that controls the energy consumption component. In a case where the control component performs the energy management function, it may be an energy management component.

Specifically, the energy management component 14 that constitutes the UAN 10 or the energy management component 24 that constitutes the HAN 20 may be built in one or more of the plurality of components that constitute the networks 10 and 20, or may exist as a separate device. The energy management component 24 may recognize the information related to energy (energy information) and the state information of a component controlled by the energy management component 24.

The energy generation component 21, the energy distribution component 22 and the energy storage component 23 may be individual components, or may constitute a single component.

The central management component 27 may be, as an example, a home server for controlling a plurality of electric home appliances.

The energy grid assistance component 28 is a component having a primary function while performing an additional function for the energy grid. For example, the energy grid assistance component 28 may be a web service providing component (e.g., a computer or the like), mobile device, television, or the like.

The mobile device may receive energy information or additional information (described later), and control the operation of at least the energy consumption component 26 using the received information.

Two components that constitute the HAN 20 may communicate with each other by means of a communication unit.

The energy generation components 11 and 21, the energy distribution components 12 and 22, the energy storage components 13 and 23, the energy management components 14 and 24, the energy metering components 15 and 25, the energy consumption component 26 and the central management component 27 may independently exist, or two or more of them may constitute a single component.

For example, the energy management component 14 or 24, the energy metering component 15 or 25 and the central management component 27 may exist as single components so as to be configured as a smart meter, an EMS and a home server, which perform their functions, respectively. Alternatively, the energy management component 14 or 24, the energy metering component 15 or 25 and the central management component 27 may constitute a single system.

When a function is performed, it may be sequentially performed in a plurality of components and/or communication units. For example, an energy management function may be sequentially performed in the energy management component, the energy metering component and the energy consumption component.

In the network system, a plurality of UANs 10 may communicate with a single HAN 20, and a single UAN 10 may communicate with a plurality of HANs 20.

The component with a specific function, which constitutes the UAN and the HAN, may be configured as a plurality of components. For example, the energy generation component, the energy consumption component or the like may be configured as a plurality of components.

In this specification, each of the components that constitute the UAN and HAN may having a function performing component that performs its own function, or each of the components itself may be a function performing component.

As an example, in a case where the energy consumption component is an electric product, the electric product has a function performing component such as a heater, compressor, motor or display. As another example, in a case where the energy consumption component is a heater, compressor, motor, display or the like, the energy consumption component itself is a function performing component.

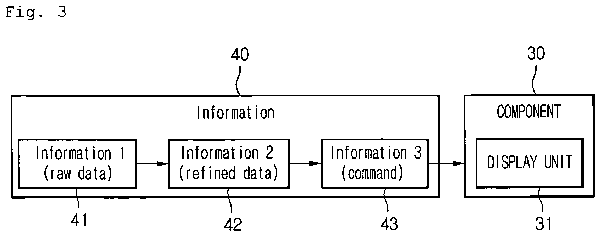

Fig. 3 is a block diagram showing an information transmission process on the network system according to the present disclosure.

Referring to Fig. 3, in the network system according to the present disclosure, a specific component 30 may receive information related to energy (hereinafter, referred to as energy information 40) by means of a communication unit. The specific component 30 may further receive additional information (environment information, time information and the like) by means of the communication unit. In this instance, the information may be received from another component. That is, at least energy information is contained in the received information.

The specific component 30 may be a component that constitutes the UAN 10 or a component that constitutes the HAN 20.

As described above, the energy information 40 may be one of information related to electricity, water, gas and the like. Hereinafter, information related to electricity will be described as an example of the energy information, but information related to other energy sources may be identically applied.

For example, the kind of information related to the electricity may include time-based pricing, curtailment, grid emergency, grid reliability, energy increment, operation priority, and the like.

The information may be divided into scheduled information previously produced based on previous information, and real-time information changed in real time. The scheduled information and the real-time information may be divided by whether or not predict information after the current time (in the future).

The energy information 40 may be transmitted/received as a true or false signal such as a Boolean signal on the network system, or may be transmitted/received as a real price. Alternatively, the energy information 40 may be transmitted/received by being divided into a plurality of levels.

The energy information 40 may be divided into time of use (TOU) information, critical peak pattern (CPP) information or real time pattern (RTP) information according to the change in the pattern of data with respect to time.

According to the TOU information, a data is changed step by step depending on time. According to the CPP information, a data is changed step by step or in real time depending on time, and emphasis is displayed at a specific point of time. According to RTP information, a data is changed in real time depending on time.

In a case where the energy information is time-based pricing information as an example, the time-based pricing information is changed. The time-based pricing information may be transmitted/received as a true or false signal such as a Boolean signal on the network system, or may be transmitted/received as a real price. Alternatively, the time-based pricing information may be transmitted/received by being divided into a plurality of levels.

In a case where the specific component 30 receives a true or false signal such as a Boolean signal, one signal may be recognized as an on-peak signal, and the other signal may be recognized as an off-peak signal.

Alternatively, the specific component 30 may recognize information on at least one drive, which contains the time-based information, and may recognize an on-peak or off-peak signal by comparing the value of the recognized information with the value of reference information.

For example, in a case where the specific component 30 recognizes information divided into levels or real pricing information, it recognizes an on-peak or off-peak signals by comparing the value of the recognized information with the value of reference information.

In this case, the value of the information on drive may be at least one of time-based pricing, electric energy, the variation of time-based pricing, the variation of electric energy, the average of time-based pricing and the average of electric energy. The value of reference information may be at least one of an average, the average between maximum and minimum values of power information during a predetermined period of time and the reference variation of power information during the predetermined period of time (e.g., the slope of consumed electric energy per unit time).

The value of reference information may be determined in real time or may be previously determined. The value of reference information may be determined on the UAN or may be determined on the HAN (a customer's direct input or an input from the energy management component, the central management component or the like).

In a case where the specific component 30 (e.g., the energy consumption component) recognizes an on-peak signal (e.g., at a point of time of recognition), an output may be determined as zero (stop or maintenance of a stop state) or may be decreased. If necessary, the output may be restored or increased. The driving scheme of the specific component may be previously determined before the specific component is operated, or may be changed when the specific component recognizes an on-peak signal posterior to the start of operation.

Alternatively, in a case where the specific component 30 recognizes an on-peak signal (e.g., at a point of time of recognition), the output is maintained under an operable condition. In this case, the operable condition means that the value of the information on drive is less than a predetermined reference. The value of the information on drive may be time-based pricing, consumed electric energy, operation time, or the like. The predetermined reference may be a relative or absolute value.

The predetermined reference may be determined in real time or may be previously determined. The predetermined reference may be determined on the UAN or may be determined on the HAN (a customer's direct input or an input from the energy management component, the central management component or the like).

Alternatively, in a case where the specific component 30 recognizes high-cost information, the output of the specific component may be maintained or increased when the difference between a state information value and a reference value is within a predetermined range. For example, in a case where a compressor of a refrigerator is not operated in a low-cost section, the temperature of a cool chamber or freezing chamber is increased. Therefore, the compressor is necessarily turned on when the temperature of the cool chamber or freezing chamber approaches a reference temperature. In a case where a high-cost section comes after the compressor is turned on, the compressor maintains a current output when the difference between the temperature of the cool chamber or freezing chamber and the reference temperature is within a predetermined range. In a case where a user selects a button for cancelling power saving in the state that the specific component 30 recognizes the high-cost information, the output of the specific component may be maintained.

Alternatively, in a case where the specific component 30 recognizes an on-peak signal (e.g., at a point of time of recognition), the output may be increased. However, although the output is increased at the point of time when the specific component recognizes the on-peak signal, the total output amount of the specific component during the entire drive period may be decreased or maintained as compared with that when the specific component is operated at a normal output level. Alternatively, although the output is increased at the point of time when the specific component recognizes the on-peak signal, the total consumed power or total time-based pricing of the specific component during the entire operation period may be decreased as compared that when the specific component is operated at a normal output level.

In a case where the specific component 30 recognizes an off-peak signal (e.g., at a point of time of recognition), the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output (change in the state of cool air that is a medium for performing the function of the refrigerator). In a case where the specific component is a washing machine or washer, hot water may be stored by driving a heater earlier than the time when the heater is to be operated (storage of hot water that is an additional medium for performing the function of the washing machine or washer). Alternatively, in a case where the specific component is a refrigerator, cool air may be stored in a separate supercooling chamber by increasing an output as compared with the existing output. Alternatively, in a case where the specific component recognizes an off-peak signal (e.g., at a point of time of recognition), electricity may be stored.

The curtailment information is information related to a mode in which the specific component is stopped or a small amount of time-based pricing is taken. As an example, the curtailment information may be transmitted/received as a true or false signal such as a Boolean signal on the network system.

If the specific component 30 recognizes curtailment information, the output may be determined as zero (stop or maintenance of a stop state) or may be decreased as described above.

The grid emergency information is information related to a power failure or the like. As an example, the grid emergency information may be transmitted/received as a true or false signal such as a Boolean signal on the network system. The information related to a power failure or the like has a relation with the reliability of a component using energy.

In a case where the specific component 30 recognizes grid emergency information, it may be immediately shut down.

The grid reliability information is information related to the supply amount of electricity supplied or information related to the quality of electricity. The grid reliability information may be transmitted/received as a true or false signal such as a Boolean signal on the network system, or may be determined by a component (e.g., an electric home appliance) through the frequency of AC power supplied to the component.

That is, if a frequency lower than the frequency of AC power supplied to the component is sensed, it may be determined that the amount of electricity supplied is small (information on the deficiency of the amount of electricity supplied) . If a frequency higher than the frequency of AC power supplied to the component is sensed, it may be determined that the amount of electricity supplied is large (information on the excess of the amount of electricity supplied).

In a case where the specific component recognizes shortage of the amount of electricity or poor quality of electricity in the grid reliability information, an output may be determined as zero (stop or maintenance of a stop state) or may be decreased. If necessary, the output may be restored or increased.

On the other hand, in a case where the specific component recognizes the information on the excess of the amount of electricity supplied, the output may be increased, or the operation may be converted from an off-state to an on-state.

The energy increment information is information related to a state that surplus electricity is generated because the amount of electricity used by a component is less than that of power generation. As an example, the energy increment information may be transmitted/received as a true or false signal such as a Boolean signal on the network system.

In a case where the specific component 30 recognizes energy increment information, the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated. Alternatively, in a case where the specific component recognizes an off-peak signal (e.g., at a point of time of recognition), electricity may be stored.

Meanwhile, in a case where the specific component 30 is the energy storage component 13 or 23, the energy storage component 13 or 23 may store electricity by receiving the electricity supplied from the UAN, for example, when electricity storage cost is smaller than a predetermined value.

However, in a case where the energy storage component 23 is connected to the energy generation component 21 that constitutes the HAN, it may continuously store energy generated by the energy generation component 21 until the electricity storage is completed. That is, the energy generated while the energy generation component 21 generates energy may be stored in the energy storage component 23.

The presence of completion of the electricity storage is determined while the energy storage component 13 or 23 stores electricity. In a case where the electricity storage is completed, the electricity supply for the electricity storage is cut off. Specifically, the presence of completion of the electricity storage may be determined using a sensor that senses the voltage, temperature or current of the energy storage component 13 or 23. The cutoff of the electricity supply may be performed using a switch (or circuit breaker) provided to a supply stage through which the electricity is supplied to the energy storage unit 13 or 23.

The electricity storage cost may be cost consumed in the electricity storage for a specific time period or electricity cost at a specific time.

As an example, in a case where the electricity storage cost is in an off-peak section (in a case where the specific component recognizes low-cost information which will be described later), the energy storage component 13 or 23 may store electricity. Alternatively, in a case where an on-peak section corresponds to an allowance section (in a case where the specific component recognizes high-cost information which will be described later), the energy storage component 13 or 23 may store in the on-peak section. In this instance, the allowance section is a section in which a power consumption information value is less than a predetermined reference. The power consumption information value may be a electricity cost, a power consumption amount, a time range, or the like. The predetermined reference may be a predetermined cost, a predetermined power consumption amount, a predetermined time, or the like. The predetermined reference may be a relative value or absolute value, and may be changed automatically or manually.

The energy storage component 13 or 23 may store a counter electromotive force generated when an energy consumption component that is rotatably operated or a motor provided to the energy consumption component is stopped (rotated).

Alternatively, the energy storage component 13 or 23 may store electricity using an energy consumption component that is rotatably operated or a motor provided to the energy consumption component. For example, in a case where the energy consumption component is a refrigerator, the energy storage component 13 or 23 may store electricity generated when a fan motor provided to the refrigerator is rotated (the fan motor may serve as a power generator or may be connected to the power generator). Alternatively, in a case where the energy consumption component is a washing machine, the energy storage component 13 or 23 may store electricity generated when a motor that rotates a drum for accommodating the laundry is rotated. In a case where the energy consumption component is a cooking appliance, the energy storage component 13 or 23 may store electricity generated when a motor for rotating a cooling fan is rotated. In a case where the energy consumption component is an air cleaner, the energy storage component 13 or 23 may store electricity generated when a motor for rotating a fan is rotated. That is, in this embodiment, in a case where a motor is provided regardless of the kind of the energy consumption component, the energy storage component 13 or 23 may store electricity generated when the motor is rotated. Alternatively, in a case where a power generator is connected to a fan rotated by the flow of air (natural flow or forcible flow), the energy storage component 13 or 23 may store electricity generated by the power generator.

The electricity stored in the energy component 13 or 23 may be supplied to one or more energy consumption components 26. In a case where electricity cost is higher than a reference value, the electricity stored in the energy component 13 or 23 may be supplied to the energy consumption component 26. As an example, in a case where the electricity cost is an on-peak (in a case where the specific component recognizes the high-cost information), the electricity stored in the energy storage component 13 or 23 may be supplied to the energy consumption component 26. In a case where the electricity cost is an off-peak (in a case where the specific component recognizes the low-cost information) but is close to the on-peak, the electricity stored in the energy storage component 13 or 21 may be supplied to the energy consumption component. If the electricity stored in the energy storage component 13 or 23 is less than a predetermined value, electricity generated in the energy generation component 11 is supplied to the energy consumption component. Thus, it is possible to prevent the operation of the energy consumption component from being stopped due to the cutoff of the electricity supply while the energy consumption component is operated.

In a case where the supply of electricity generated in the energy generation component 11 is cut off by interruption of electric power, the electricity stored in the energy component 13 or 23 may be supplied to the energy consumption component. In a case where the energy consumption component is an electric product, the electricity stored in the energy storage component 13 or 23 may be supplied to a communication unit or control unit provided to the electric product.

The electricity stored in the energy component 13 or 23 may be supplied to a portion of a plurality of energy consumption components. As an example, the stored electricity may be supplied to an electric product such as a refrigerator required in continuous operation among a plurality of electric products. Alternatively, the stored electricity may be supplied to an energy consumption component with relatively low power among a plurality of energy consumption components that constitute one electric product. It will be apparent that the stored electricity is supplied to an energy consumption component with high power. Alternatively, when a course using a relatively small amount of power is performed among a plurality of courses in which an electric product is performed, the stored electricity may be supplied. It will be apparent that the stored electricity may be supplied even when a course using a large amount of power is performed.

Meanwhile, in a case where electricity is generated and stored by a fan or motor as described above, the electricity stored in the energy storage component 13 or 23 may be supplied to an energy consumption unit with relatively low power. As an example, the electricity stored in the energy storage component 13 or 23 may be supplied to an LED lamp, a display, a control unit, a communication unit, a low-power heater, or the like. Alternatively, in a case where the energy consumption component performs a plurality of courses, the electricity stored in the energy storage component 13 or 23 may be supplied to the energy consumption component in a course that requires low power.

The energy storage component 23 may be built in connected to one energy consumption component. Alternatively, a plurality of energy storage components 23 may be built in or connected to a plurality of energy consumption components, respectively. Alternatively, a plurality of energy storage components 23 may be built in or connected to one energy consumption component. The plurality of energy storage components 23 may be connected to one another to share the stored electricity.

Among the information related to energy, the on-peak information, the curtailment information and information on the deficiency of the amount of electricity supplied may be recognized as high-cost information considered that energy cost is relatively expensive. In this instance, the section in which the high-cost information is recognized by the specific component may referred to as a low-cost section.

On the other hand, among the information related to energy, the off-peak information, the energy increment information and the information on the excess of the amount of electricity supplied may be recognized as low-cost information considered that energy cost is relatively cheap. In this instance, the section in which the low-cost information is recognized by the specific component may be referred to as a low-cost section.

The information related to the fluctuation of the energy cost (high-cost or low-cost information) may be recognized as information for determining a power saving driving scheme of the specific component (e.g., the energy consumption component). That is, the information related to the fluctuation of the energy cost may be recognized by dividing a time slot (time period) based on energy cost or pricing period (pricing zone) for determining a driving scheme of the specific component into at least two or more.

A high period means a high price time period (period of high cost) or a high pricing period and a low period means a low price time period (period of low cost) and a low pricing period.

As an example, in a case where the information related to energy is recognized as a Boolean signal, the time slot (time period) based on energy cost or pricing period (pricing zone) for determining a driving scheme of the specific component may be divided into two. In a case where the information related to energy is divided into a plurality of levels or recognized as real-time information, the time period or pricing period may be divided into three or more.

Meanwhile, the information related to energy cost corresponding to at least time may be recognized as information for determining a power saving driving scheme of the specific component. That is, the information related to energy cost may be recognized by dividing a time slot (time period) or pricing zone (time period) into at least two or more. As described above, the divided time period or pricing period may be determined based on the kinds of the recognized information (the Bloolean signal, the plurality of levels and the real-time information).

In other words, the information related to fluctuation of energy cost may be recognized by dividing a determination factor for driving the specific component into two or more, and functions on time and energy cost may be included in the determination factor.

In a case where the information related to energy cost is divided into two levels or more, the driving scheme of the specific component may be determined according to the information divided into levels.

On the other hand, in a case where the recognized information related to energy cost is not divided based on a specific reference (e.g., real-time cost information), it is compared with predetermined information, and the driving scheme of the specific component may be determined based on the compared result.

Here, the predetermined information may be reference information (e.g. reference value) for dividing the information related to energy cost, and the compared result may be whether not the information related to energy cost is more or less than the reference value.

Specifically, each of the kinds of information related to energy may be divided into first information 41 that is raw information, second information 42 that is refined information, and third information 43 that is information for performing the function of the specific component. That is, the first information is a raw data, the second information is a refined data, and the third information is a command for performing the function of the specific component.

The information related to energy is included a signal, and the signal is transmitted. In this instance, one or more of the first to third information may be transmitted several times while the content of the information is not converted but only the signal including the information is converted.

For example, as shown in Fig. 3, a component that receives a signal including the first information may convert only the signal and transmit a new signal including the first information to another component.

Therefore, it is described in this embodiment that the conversion of signal is a different concept from the conversion of information. In this instance, it can be readily understood that when the first information is converted into the second information, the signal including the first information is also converted into the signal including the second information.

However, the third information may be transmitted several times in the state that the content of the third information is converted or in the state that only the signal including the third information is converted while the content of the third information is identically maintained.

Specifically, in a case where the first information is raw information on time-based pricing, the second information may be refined information on the time-based pricing. The refined information on the time-based pricing is information in which the time-based pricing is divided into a plurality of levels or analysis information. The third information is a command generated based on the second information.

The specific component may generate, transmit or receive one or more of the first to third information. The first to third information are not necessarily transmitted or received in sequence. Only a plurality of pieces of third information without the first and second information may be transmitted in sequence or parallel. Alternatively, the first and third information may be transmitted or received together, the second and third information may be transmitted or received together, or the first and second information may be transmitted or received together.

As an example, in a case where the specific component receives the first information, it may transmit the second information or may transmit the second and third information.

In a case where the specific information receives only the third information, it may generate and transmit new third information.

Meanwhile, in the relation between two pieces of information, one is a message and the other is a response for the message. Thus, each of the components that constitute the network system may transmit or receive a message. In a case where each of the components receives a message, it may respond to the message. Therefore, in the case of an individual component, the transmission of a message is a relative concept with the response for the message.

The message may include a data (first or second information) and/or a command (third information).

The command (third information) may include a command for storing the data, a command for generating the data, a command for processing the data (including the generation of an additional data), a command for generating an additional command, a command for transmitting the additionally generated command, a command for transmitting a received command, and the like.

In this specification, the response for the received message means storage of the data, processing of the data (including generation of an additional data), generation of a new command, transmission of the newly generated command, simple transmission of a received command (including generation of a command for transmitting the received command to another component), operation, transmission of the stored information, transmission of an acknowledge message (acknowledge character or negative acknowledge character), or the like.

For example, in a case where the message is first information, the specific component that receives the first information may generate second information by processing the first information, or may generate the second information and new third information, as a response for the message.

The specific component that receives the message may provide a response related to energy. Here, the term "response" may be understood as a concept including an operation through which the specific component can perform a function. As an example, the HAN 20 may perform an operation related to energy by receiving a message.

The response (operation) related to energy, provided by the specific component, will be described in detail. For example, the specific component may be an energy consumption component.

The energy consumption component may be driven so that the energy cost when it is driven based on the recognition for energy information is reduced as compared with that when it is driven without the recognition for energy information.

The specific component may include a plurality of modes in which it is driven to perform its own function. The plurality of modes are a first mode and a second mode in which energy cost is relatively saved as compared with that in the first mode. The specific component may be driven in at least one of the first and second modes.

Here, the first mode may be a general mode and the second mode may be a power saving mode. Alternatively, the first and second modes may all be power saving modes.

The general mode may be understood as a mode in which the function of the specific component is performed without recognition of energy information. On the other hand, the power saving mode may be understood as a mode in which the function of the specific component is performed based on the recognition of energy information so as to save energy cost.

In a case where the first and second modes are power saving modes, the first mode may be specified as a driving scheme for saving energy cost and the second mode may be specified as a driving scheme in which the energy cost in the second mode is more saved than that in the first mode.

Meanwhile, in a case where the specific component (e.g., the energy consumption component) is driven, at least a portion is recognized in a driving scheme including at least drive time and course. In this case, an unrecognized portion may be generated so as to save energy cost, and a recognized portion may be converted into another scheme.

For example, at least a portion of the driving scheme may be recognized under the control of the energy management component, the control of the energy consumption component, or the like. In a case where a specific driving scheme is further required so as to save energy cost, an unrecognized portion of the driving scheme may be newly generated, and a recognized portion may be converted into another scheme so as to save energy.

It will be apparent that the process of generating the unrecognized portion may be omitted. In this case, the process of converting the recognized portion into another scheme. On the other hand, the process of converting the recognized portion into another scheme may be omitted. In this case, the process of newly generating the unrecognized portion may be performed.

The drive time may include a drive start time or drive end time. The course may include a drive period of the specific component and the power of the specific component.

The generated scheme or converted scheme may be a scheme recommended by the specific component so as to save energy cost. Here, the specific component may be an energy consumption component (control component) or the energy management component.

As an example, in a case where the recognized scheme is a specific drive time, the specific drive time may be converted into another time so as to save energy cost, and a specific course may be generated.

On the other hand, in a case where the recognized scheme is a specific course, the specific course may be converted into another course so as to save energy cost, and a specific time may be generated.

Under the control described above, a change in time or power may be made with respect to the output function of the specific component based on time.

The generated scheme or converted scheme may be performed within a set range. That is, in the process of recognizing at least a portion of the driving scheme, the generation or conversion of the driving scheme may be performed within a predetermined reference in which the recognized portion appears (e.g., restriction set by a user, constraint set under the control of the energy management component or energy consumption component, or the like).

Therefore, in a case where the set range is out of the predetermined reference, it is restricted to generate the unrecognized portion or to convert the recognized portion into another scheme.

Another embodiment is proposed.

Cost information may further included in the recognized driving scheme. That is, in a case where the cost information is recognized, a portion related to the drive time or course may be generated. The generated driving scheme may be recommended.

Meanwhile, a response of the specific component based on the information related to the fluctuation of the energy cost (high-cost or low-cost information), e.g., a power control for power saving driving, may be performed. An output decrease (including an output of zero) or output increase may be included in the output control.

It is as described above that the output is decreased or zero, maintained or increased based on the recognition for the information (on-peak or off-peak) related to energy cost.

If high-cost information is recognized, the output may be zero or decreased. Specifically, the output in the recognition of the high-cost information may be decreased as compared with that in the recognition of low-cost information. As described above, the decrease of the output may be previously determined before the specific component is operated, or may be changed when the high-cost information is recognized posterior to the start of the operation of the specific component.

In a case where the output of the specific component is zero or decreased, the function to be performed by the specific component may be lost as compared with a normal case. Therefore, a response for restoring the lost function may be performed.

As an example, after the output of the specific component is decreased, the specific component may be controlled so that the total operation time of the specific component is increased or so that the output is increased in at least a time period.

In other words, if specific reference information related to energy information is recognized in a period after the output of the specific component is controlled, the response for controlling the output may be released. Here, the term "period" may be divided based on a point of time when the high-cost information is recognized.

The total operation time may be understood as a time approaching a specific target in the process of performing the function of the specific component. As an example, in a case where the specific component is an electric appliance (washing machine, drying machine, cooking appliance or the like) intermittently driven (or driven in a specific course), the total operation time may be understood as a time until a corresponding course is completed.

On the other hand, in a case where the specific component is an electric appliance (refrigerator, water purifier, or the like) driven at normal times, the total operation time may be understood as a time approaching a target set for performing the function of the specific component. For example, the set target may be a target temperature, a target amount of ice produced, or a target amount of clean water in the refrigerator.

The total operation time may be increased as compared with the operation time set before the output of the specific component is decreased. In a case where the output of the specific component is not decreased, the total operation time may be increased as compared with the operation time of the specific component. However, although the total operation time of the specific component is increased, the specific component is controlled so that the total energy cost generated through the drive of the specific component can be saved as compared with that when the output of the specific component is not decreased.

If the high-cost information is recognized, the output of the specific component may be increased.

However, although the output is increased at a point of time when the high-cost information is recognized, the total output of the specific component during the entire driving period may be decreased or maintained as compared with that when the specific component is operated under a normal output. Alternatively, although the output is increased at a point of time when the high-cost information is recognized, the total power consumption or total time-based pricing of the specific component during the entire driving period may be decreased as compared with that when the specific component is operated under the normal output.

If the low-cost information is recognized, the output of the specific component may be increased. For example, in a case where the operation reservation of the specific component is set up, the driving of the specific component may be started before the setup time, or a component having a large output in a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated. Alternatively, in a case where the specific component recognizes an off-peak signal (e.g., at a point of time of recognition), electricity may be stored.

Meanwhile, in a case of a specific condition (additional condition) is generated based on the information related to the fluctuation of the energy cost (high-cost or low-cost information), the response of the specific component, e.g., the output control for power saving driving, may be limited. That is, the output of the specific component may be maintained.

Here, the term "limitation" may be understood as the release of the output control performed or not performed.

The specific condition includes a case where influence on energy cost is minute even though the output control of the specific component is not performed or a case where it is necessary to prevent a function to be performed by the specific component from being degraded when the output of the specific component is controlled.

Whether or not the influence on the energy cost is minute may be determined based on a predetermined reference (time-based pricing, power consumption or information on operation time). The predetermined reference may be a relative or absolute value.

The case where the function to be performed by the specific component is degraded may be considered as a case where the specific component is a defrosting heater, for example.

In a case where it is controlled to decrease the output in a high-cost time period and to increase the output in the low-cost time period, the driving of the defrosting heater is more frequently performed than that during a normal time (setup period). In this case, the temperature of a storage room in the refrigerator is increased, and thus, the control of the output can be limited.

Meanwhile, the specific component 30 may include a display unit 31 for displaying information. In this embodiment, the term "information display" means that visual, auditory, olfactory and tactile information is known to the outside. The display unit 31 may include a touch screen for selecting or inputting information. Alternatively, the specific component 30 may include a separate input unit for inputting information by cable or radio.

All the information (energy information or additional information except the energy information) described above may be displayed in the display unit 31. One of the energy information and additional information may be displayed, or two or more pieces of information may be simultaneously displayed. That is, two or more pieces of information may be simultaneously displayed in the display unit 31. As an example, in a case where two or more pieces of information are simultaneously displayed, any one of the information is selected. Then, the selected screen may be enlarged, and the unselected screen may reduced. As another example, if any one of the two or more pieces of information is selected, the selected screen may be enlarged, and the unselected screen may disappear. In a case where specific information is selected and the selected screen is enlarged, information more specific that the previous information or information different from the previous information may be displayed on the enlarged screen. For example, in a case where the selected information is a character, graphic information may be displayed on the enlarged screen, or two or more pieces of information may be sequentially displayed on the enlarged screen. In a case where two or more pieces of information are displayed in the display unit 31, two or more relative positions may be varied.

Information except energy cost information and energy cost may be displayed in the display unit 31. The energy cost information may include current cost, past cost or estimated cost in the future. The energy cost information may include not only information on cost information in a specific period or time but also information on cost used with respect to the operation of a component, cost used in the present, cost to be used (estimation cost), or the like.

The information except the energy cost information may include information on energy reduction, emergency situation, grid safety, power generation quantity, operation priority, energy consumption, energy supply amount, information (e.g., cost change rate, average cost, level or the like) newly generated based on two or more pieces of information (one or more pieces of energy cost information and/or information except the one or more pieces of energy cost information), and the like. In this instance, the energy consumption may be energy consumption used two or more HANs, and may be simultaneously or selectively displayed.

The information on energy consumption may include information on past consumption, current consumption and estimated consumption in the future. The information on energy consumption may include information on accumulated consumption for a specific period (time), average consumption, increasing rate of consumption, decreasing rate of consumption, maximum consumption, minimum consumption, and the like.

The additional information may include one or more of environment information, time information, information related to the one or more components, information related to another component and information related to a user using the one or more components. The environment information may include one or more of information related to carbon dioxide emission rate, concentration of carbon dioxide in air, temperature, humidity, precipitation, presence of rainfall, amount of solar radiation, amount of wind.

In addition to the information described above, information refined based on at least one information or newly generated information may also be displayed in the display unit 31.

In a case where the specific component 30 is the energy storage component 13 or 23, the presence of use of the stored electricity, the remaining amount of the store electricity and the like may be displayed. If the remaining amount of the stored electricity is less than a predetermined value, alarm information may be displayed.

The information displayed in the display unit 31 may include one or more of information on number, character, sentence, figure, shape, symbol, image and light. The information displayed in the display unit 31 may include one or more of information on graph for each time or period, level, table. One or more of the shape, color, brightness, size, position, alarm period, alarm time of the information displayed in the display unit 31 may be varied.

A currently operable function (or menu) may be displayed in the display unit 31. Alternatively, among a plurality of functions, operable and inoperable function may be divided by size, color, position and the like, and then displayed in the display unit 31. Alternatively, in a case where separate input units are provided, only an input units for selecting an operable function may be activated, or an input unit for selecting an operable function and an input unit for selecting an inoperable function may be displayed in different colors.

The target or display method of information displayed in the display unit 31 may be set and changed by a user, or may be changed automatically.

In a case where a condition for informing the user of information is satisfied, specific information may be displayed in the display unit 31. It will be apparent that a portion of a plurality pieces of information may be continuously displayed in the state that a component is turned on. The display time of the information may be changed or set automatically or manually.

If specific information (one or more pieces of information) is selected using the input unit, the selected information may be displayed. If a user contacts a portion of a component, e.g., an input unit, a handle, a display or the like, regardless of information display selection, or operates one or more buttons or knobs that constitute the input unit, a portion of the information may be displayed. In this instance, the information to be displayed may be set or changed. It will be apparent that a sensing unit for sensing a user's contact may be provided to the component. Alternatively, the specific information may be displayed by installation environment or variation of outdoor environment. Alternatively, the specific information may be displayed when the specific component receives new information. Alternatively, the specific information may be displayed when the kind or state of the specific component is changed. As an example, if a light emitting unit is turned off in an off-peak section and an on-peak section comes, the light emitting unit may be turned on. Alternatively, the specific information may be automatically displayed when the operation or state of the component is changed. As an example, in a case where the mode of the component is changed, information related to the changed mode may be automatically displayed.

Meanwhile, the display unit 31 may be separably connected or fixed to the component 30. In a case where the display unit 31 is separable from the component 30, it may perform wired or wireless communication with the component 30 (or control unit of the component). In a case where the display unit 31 is fixed to the component 30, it may also perform wired or wireless communication with the component 30.

In a case where the display unit 31 is separable from the component 30, a communication unit and an input unit for inputting or selecting information may be provided to the display unit 31. Thus, information can be inputted or selected through the input unit in the state that the display unit 31 is separated from the component 30. The communication unit may be provided to the component 30, and only the display unit 31 may be separated from the component 30. The display unit 31 may be the energy management component 24, the energy metering component 25 or the central management component 27, or may be a separate control apparatus.

In a case where the display unit 31 is provided with a communication unit, a communication unit may also provided to the component 30. In a case where the display unit 31 and the component 30 are in the state that they are communicated with each other and information is transmitted/receive through a communication signal, the display unit 31 may be used. That is, in a case where the intensity of a signal is secured so that information can be included in the communication signal, the display unit 31 may be in an available state. On the other hand, in a case where the display unit 31 is not communicated with the component 30 or information is not included in the communication signal due to the weak intensity of the signal, the display unit may be in an unavailable state. One of the display unit 31 and the component 30 transmits a communication signal, and the other of the display unit 31 and the component 30 transmits a response signal. The presence of use of the display unit 31 may be determined by the presence of reception of the communication and response signals and the signal intensity. That is, in a case where any one of the display unit 31 and the component 30 does not receive a signal or the intensity of received signal is less than a reference intensity, it may be determined that the display unit 31 is unavailable. Any one of the display unit 31 and the component 30 may increase the intensity of a transmission signal until it receives a response signal of which intensity is more than the reference intensity.

Information for informing the user of the presence of use of the display unit 31 may be displayed in the display unit 31 or the component 30. If it is recognized that the display unit 31 is unavailable, the component 30 may be controlled to increase its unique performance, to perform a door locking function or to limit its operation. Alternatively, the power of the component may be off while maintaining the power of a communication apparatus (modem) required to perform communication in the network system. Alternatively, the power of the component may be off while maintaining only a memory function for storing the state information of the component.

Meanwhile, sensors may be provided to the respective display unit 31 and component 30 so as to sense the presence of mounting of the display unit 31. As an example, the presence of mounting of the display unit 31 may be determined when the component 30 is operated. Each of the sensors may be a vibration sensor for sensing vibration. If the display unit 31 is mounted on the component 30, vibration generated in the operation of the component 30 can be transferred to the display unit 31. Therefore, in a case where the difference between the values of vibrations respectively sensed by the sensors is less than a predetermined value, it may be recognized that the display unit 31 is mounted on the component 30. If it is recognized that the display unit 31 is mounted on the component 30, the operation of the component 30 may be controlled so that vibration or noise generated in the operation of the component 30 is decreased. As an example, in a case where the component 30 is a washing machine or drier, the rotation speed of a motor may be decreased. In a case where the component 30 is a refrigerator, the driving period of a compressor may be decreased. On the contrary, if it is recognized that the display unit 31 is separated from the component 30, the component may be controlled to increase its unique performance, to perform a door locking function or to limit its operation.

As another example, each of the sensor may be a temperature sensor. In a case where the difference between the values of temperatures respectively sensed by the sensors is less than a predetermined value, it may be recognized that the display unit 31 is mounted on the component 30.

In the state that the display unit 31 is separated from the component 30, an auxiliary display unit may be provided to the component 30 so as to enable the operation of the component 30. The presence of operation of the auxiliary display unit may be determined based on the presence of use of the display unit 31. As an example, if the display unit 31 is separated from the component 30 or is unavailable, the auxiliary display unit may be turned on.

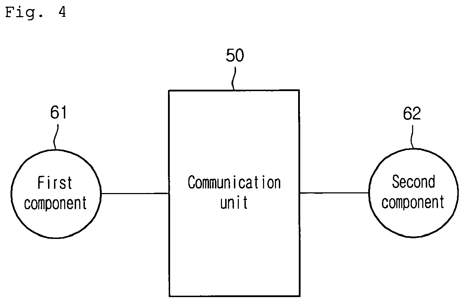

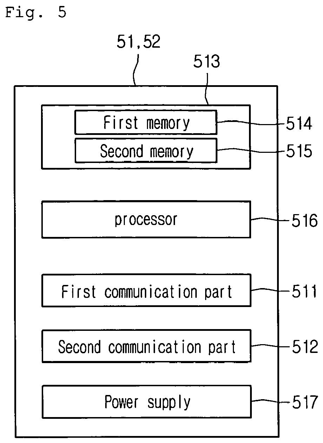

Fig. 4 is a view showing the communication structure of two components that constitute the network system according to a first embodiment. Fig. 5 is a block diagram showing the detailed configuration of a communication device that constitutes a communication unit.

Referring to Figs. 2, 4 and 5, first and second component 61 and 62 that constitute the network system may perform wired or wireless communication by means of a communication unit 50. The first and second components 61 and 62 may perform unidirectional or bidirectional communication.

In a case where the two components 61 and 62 perform wired communication, the communication unit 50 may be a simple communication line or power line communication means. It will be apparent that the power line communication means may include communicators (e.g., a modem or the like) respectively connected to the two components.

In a case where the two components 61 and 62 perform wireless communication, the communication unit 50 may include a first communicator 51 connected to the first component 61 and a second communicator 52 connected to the second component 62. In this case, the first and second communicators 51 and 52 perform wireless communication with each other.

As an example, if any one of the first and second communicators is powered on, one of the two communicators may transmit a network participation request signal, and the other of the two communicators may transmit a permission signal. As another example, if any one of the first and second communicators is powered on, the powered-on communicator may transmit a network participation request signal to a communicator previously participated in the network, and the communicator that receives the request signal may transmit a permission signal to the powered-on communicator.

In a case where a communicator that recognizes energy information determines that an error occurs in the received information in the state that a specific component participates in the network, the information is re-requested. For example, in a case where the first communicator receives energy information from the second communicator but an error occurs in the received information, the first communicator may request the second communicator to re-transmit the energy information. If the first communicator does not receive normal information for a predetermined time or number of times, it is determined that the first communicator has an error. In this case, information for informing a user of the error may be displayed in the first communicator or the first component 61.

The first component 61 may be a component that constitutes the UAN 10 or a component that constitutes the HAN 20.

The second component 62 may be a component that constitutes the UAN 10 or a component that constitutes the HAN 20.

The first and second components 61 and 62 may be the same kind of component or different kinds of components.

Components may be joined in the UAN 10 or the HAN 20.

Specifically, addresses may be assigned to a plurality of components, e.g., first and second components, respectively. Here, the addresses are necessary for performing communication between the components and can be mapped to at least a group.

The address may be understood as values respectively converted from the unique code of the first or second component. That is, at least a portion of the components that constitute the network system may have an unchangeable/unique code, and the code may be converted into an address for building a network.

In other words, product codes for at least some of the plurality of components capable of constituting first and second networks may be converted into different network codes based on the constituted networks.

As an example, the product code may be a unique code determined in production of electric appliances or a code separately provided for the registration of a network. The product code may be converted into an identity (ID) for identifying a network to which the electric appliance is to be registered.

The first and second networks may be networks that constitute the UAN 10 or networks that constitute the HAN 20. On the other hand, the first and second networks may be the UAN 10 and the HAN 20, respectively. Alternatively, the first and second networks may be the HAN 20 and the UAN 10, respectively.

A first component and a second component for allowing the first component to participate in the network may be included in the plurality of components that constitute the network. For example, the first component may be an electric appliance and the second component may be a server.

Any one of the first and second components transmits a request signal for participating in the network, and the other of the first and second components may transmit a permission signal.

That is, a signal may be transmitted/received between the first and second components, and whether or not to participate in the network may be determined based on the transmission time or number of the signal.

As an example, the first component transmits a test signal to the second component, and it is determined whether or not a response signal from the second component is transmitted to the first component. In a case where the response signal is not transmitted, the first component retransmits the test signal, and it is re-determined whether or not a response signal from the second component is transmitted to the first component. By repeating such a process, if the transmission number of the test signal exceeds the setting number of the test signal, it may be determined that the second component does not participate in the network.

Meanwhile, the first component may transmit the test signal to the second component. If a response signal from the second component is not transmitted within a setup time, it may be determined that the second component does not participate in the network.

The first and second communicators 51 and 52 may have the same structure. Hereinafter, the first and second communicators 51 and 52 will be referred to as a communicator 51 and 52.

The communicator 51 and 52 may include a first communication part 511 for communication with the first component 61, a second communication part 512 for communication with the second component 62, a memory 513 for storing information received from the first component 61 and information received from the second component 62, a processor 516 for performing information processing, and a power supply 517 for supplying power to the communicator 51 and 52.

Specifically, the communication language (or scheme) of the first communication part 511 may be identical to or different from that of the second communication part 512.

Two kinds of information respectively received from the two components may be stored in the memory 513. The two kinds of information may be stored in a single sector or may be respectively stored in sectors. In any case, an area in which the information received from the first component 61 may be referred to as a first memory 514, and an area in which the information received from the second component 62 may be referred to as a second memory 515.

The processor 516 may generate first information or generate second and third information based on information received from the component or another communicator.

As an example, in a case where the communicator 51 and 52 receives the first information, it may generate information or sequentially generate the information and the second information by processing a data. Alternatively, in a case where the communicator 51 and 52 receives the first information, it may generate the second and third information by processing a data. In a case where the communicator 51 and 52 receives the third information, it may new third information.

For example, in a case where the second component is an energy consumption component (electric home appliance, component that constitutes the electric home appliance, or the like), the second communicator may generate a command for reducing energy consumption. In a case where the second component is an energy generation component, energy distribution component or energy storage component, the second communicator 52 may generate a command for energy generation time, generation amount, energy distribution time, distribution amount, energy storage time, storage amount or the like. In this case, the second communicator 52 serves as an energy management component.

The power supply 517 may receive electricity supplied from the components 61 and 62 or may receive electricity supplied from a separate power source. Alternatively, the power supply 517 may be a battery or the like.

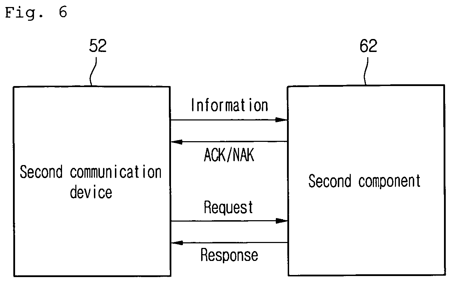

Fig. 6 is a view showing a communication performing process between a specific component and a communication device according to the first embodiment.

Hereinafter, for convenience of illustration, a communication performing process between the second component 62 and the second communicator 52 will be described as an example. A communication performing process between the first component 61 and the first communicator 51 may be identically applied to that between the second component 62 and the second communicator 62.

Referring to Figs. 5 and 6, the second communicator 52 receives a message from the first communicator 51. The second communicator 52 may receive a message in real time or by periods without transmitting a request for the message to the first communicator 51, or may receive a message as a response for the request for the message to the first communicator 51. Alternatively, the second communicator 52 may receive a message by requesting information to the first communicator 51 at a point of time when it is initially turned on. Then, the second communicator 52 may receive information in real time or by periods from the first communicator 51 without a request for information.

The information received from the first communicator 51 is stored in the memory 513. The second communicator 52 transmits a message to the second component 62 as a response for the message. In this instance, the message transmitted to the second component 62 relates to new information different from the information previously stored in the memory 513, or information generated in the processor 516.

Then, the second component 62 transmits an acknowledge character (ack) or negative acknowledge character (Nak) to the second communicator 52 as a response for the message. The second component 62 performs a function (generation of a command, operation, or the like) based on the received information, or waits for performing the function.

Meanwhile, the second communicator 52 requests component information to the second component 62 in real time or by periods. As an example, the component information may be component state information or information on a component unique code, a manufacturer, a service name code, an electricity use amount, and the like. Then, the second component 62 transmits component information to the second communicator 52 as a response for the request. The component information is stored in the memory 513 of the second communicator 52.

If the second communicator 52 receives a message for requesting the component information from the first communicator 51, it transmits the component information stored in the memory 513 to the first communicator 51 as a response for the message. Alternatively, the second communicator 52 transmits the component information stored in the memory 513 to the first communicator 51 in real time or by periods.

The second communicator 52 may transmit the information of the first component, stored in the memory, to the first component together with the information received from the first component. Alternatively, the second communicator 52 may transmit the information of the first component, stored in the memory, to the first component, separately from transmitting the information received from the first component.

The second communicator 52 stores the information of the second component 62 in the memory 513. Hence, in a case where the second communicator 52 receives a message for requesting the component information from the first communicator 51, it transmits the component information stored in the memory 513 directly to the first communicator 51 without a request for information to the second component 62, and thus, the communication load of the second component 62 can be reduced. That is, the second component becomes a virtual component.

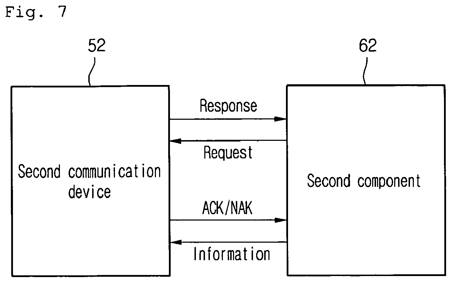

Fig. 7 is a view showing a communication performing process between a specific component and a communication device according to a second embodiment.

Hereinafter, for convenience of illustration, a communication performing process between the second component 62 and the second communicator 52 will be described as an example. A communication performing process between the first component 61 and the first communicator 51 may be identically applied to that between the second component 62 and the second communicator 62.

Referring to Figs. 5 and 7, the second communicator 52 receives a message from the first communicator 51. The second communicator 52 may receive a message in real time or by periods without transmitting a request for the message to the first communicator 51, or may receive a message as a response for the request for the message to the first communicator 51. Alternatively, the second communicator 52 may receive a message by requesting information to the first communicator 51 at a point of time when it is initially turned on. Then, the second communicator 52 may receive information in real time or by periods from the first communicator 51 without a request for information.

If the second communicator 52 receives a message for requesting information from the second component 62, it transmits a message to the second component 62 as a response for the message for requesting the information. In this instance, the message transmitted to the second component 62 relates to new information different from the information previously stored in the memory 513, or information generated in the processor 516. Alternatively, the information transmitted to the second component 62 may be information received from the first component.

The second component 62 performs a function based on the received information or waits for performing the function.

Meanwhile, the second component 62 transmits component information to the second component 62 in real time or by periods. As an example, the component information may be component state information or information on a component unique code, a manufacturer, a service name code, an electricity use amount, and the like.

As described above, the electric use amount may be detected by the smart meter. In a case where the electricity use amount is included in the information of the second component 62, the correction of an actual electricity use amount may be performed by comparing the information of the second component 62 with the information of the smart meter.

Then, the second communicator 52 stores the information of the second component 62 in the memory 513, and transmits an acknowledge character (ack) or negative acknowledge character (Nak) to the second component 62 as a response for the message.

If the second communicator 52 receives a message for requesting component information from the first communicator 51, it transmits the information of the second component 62, stored in the memory 513, to the first communicator 51 as a response for the message. Alternatively, the second communicator 52 the information of the second component 62, stored in the memory 513, to the first communicator 51 in real time or by periods.

The second communicator 52 stores the information of the second component 62 in the memory 513. Hence, in a case where the second communicator 52 receives the message for requesting the component information from the first communicator 51, it transmits the information stored in the memory 513 directly to the first communicator 51 without transmitting a request for information to the second component 62, and thus, the communication load of the second component 62 can be reduced. That is, the second communicator 52 becomes a virtual component.

### <Applications>

In the following descriptions, the first and second components may be reversed to each other, and therefore, overlapping descriptions will be omitted. For example, in a case where the first component is an electric home appliance and the second component is an energy management component, description in a case where the first component is an energy management component and the second component is an electric home appliance will be omitted.

Information transmitted/received by each of the components may be all the information described above. Particularly, specific information may be transmitted/received for each of the components.

The energy generation components 11 and 21 may transmit/receive information related to energy generation amount, and the like. The energy distribution components 12 and 22 may transmit/receive information related to energy distribution amount, distribution time, and the like. The energy storage components 13 and 23 may transmit/receive information related to energy storage amount, storage time, and the like. The energy metering components 15 and 25 may transmit/receive information related to energy consumption amount, and the like. The energy management components 14 and 24 may transmit/receive information related to energy generation, distribution, storage, consumption, cost, reliability, emergency situation, and the like.

### (1) Case where second component is one component of HAN

The second component 62 may be an energy consumption component 26, e.g., a heater, motor, compressor, display or the like. In this case, the first component 61 may be a MICOM or energy consumption component 26 as an example. The MICOM or energy consumption component 26 may transmit a message for reducing energy consumption to another energy consumption component 26. Then, the another energy consumption component 26 may perform an operation for reducing energy, for example.

As another example, the energy consumption component 26 may be an electric home appliance. In this case, the first component 61 may be an energy storage component 23, an energy consumption component 26 (electric home appliance), an energy management component 24, an energy metering component 25, a central management component 27, a web server component 28, or a component that constitutes the UAN 10.

In this instance, an energy management function may be included or not included in the first component 61 except the energy management component 24.

In a case where an energy management function or solution is not included in the first component 61, it may be included in the communication unit or may be included in the MICOM of the second component 62. In this case, the energy management function is related to the consumption of energy.

As still another example, the second component 62 may be an energy generation component 21, an energy distribution component 22 or an energy storage component 23. In this case, the first component 61 may be an energy management component 24, a central management component 27, a web server component 28 or a component that constitutes the UAN 10.

A message may be transmitted to the second component 62. Here, the message may include energy generation time, generation amount or the like, energy distribution time, distribution amount or the like, and energy storage time, storage amount or the like.

In this instance, an energy management function may be included or not included in the first component 61 except the energy management component 24.

In a case where an energy management function or solution is not included in the first component 61, it may be included in the communication unit. In this case, the energy management function is related to the generation, distribution and storage of energy.

As still another example, the second component may be an energy metering component 25. In this case, the first component 61 may be a central management component 27, a web server component 28 or a component that constitutes the UAN 10.

An energy management function may be included or not included in the energy metering component. In a case where the energy management function is included in the energy metering component 25, the energy metering component 25 performs the same operation as the EMS.

In a case where an energy management function or solution is included in the energy metering component 25, it may be included in the communication unit or may be included in the second component 62.

As still another example, the second component 62 may be a central management component 27. In this case, the first component 61 may be a web server component 28 or a component that constitutes the UAN 10.

### (2) Case where second component is one component of UAN

The first component 61 may be a component that constitutes the UAN 10. In this case, the first and second components 61 and 62 may be the same kind of component or different kinds of components.

An energy management function may be included in the first component 61, the second component 62 or the communication unit.

The energy management function included in a specific component or the energy management function included in the energy management component 14 may be related to generation amount, distribution amount, storage amount, energy use amount of a component that constitutes the HAN 20.

In this specification, an example capable of constituting the network system has been described. However, any component not mentioned in this specification may be a first or second component that performs communication through the communication unit. For example, an automobile may be a second component, and the energy management component 24 may be a first component.

### (3) Case where one of first and second components communicates with third component

Although the communication between two components has been described in the aforementioned examples, each of the first and second components may perform communication with one or more components (a third component to an n-th component).

In this case, the relation of the first or second component that performs communication with the third component and the like may be one of the aforementioned examples.

For example, the first component may be a component that constitutes the UAN, the second component may be an energy management component 24 that communicates with the first component, and the third component may be an energy consumption component 26 that communicates with the second component. In this instance, one or more of the three components may communicate with another component.

In this specification, the first to n-th components may be components that constitute the UAN or components that constitute the HAN. Alternatively, a portion of the components may be components that constitute the UAN, or another portion of the components may be components that constitute the HAN.

Hereinafter, third and fourth embodiments will be described. A difference between these embodiments and the aforementioned embodiments will be mainly described, and descriptions and reference numerals will be quoted to elements of these embodiments identical to those of the aforementioned embodiments.

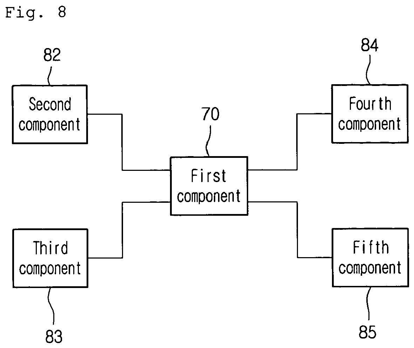

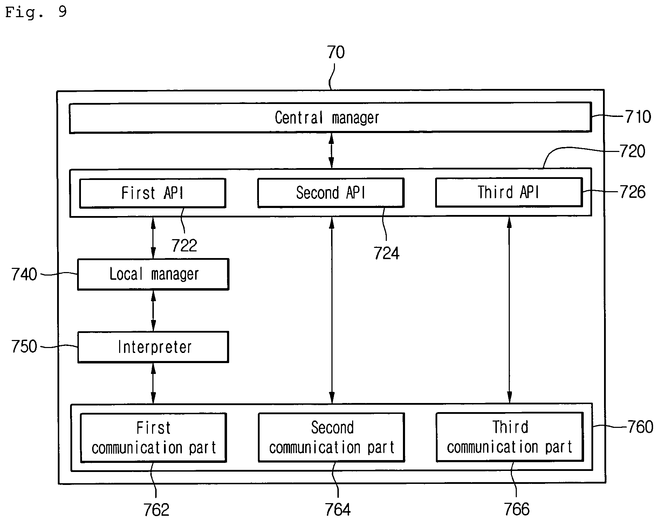

Fig. 8 is a view showing the communication structure of components that constitute the network system according to a third embodiment. Fig. 9 is a block diagram showing the detailed configuration of a first component in Fig. 8.

Referring to Figs. 8 and 9, a first component 70 may communicate with second to fifth components 82, 83, 84 and 85. Hereinafter, it will be described as an example that the first component 70 is a central management component (home server), the second and third components 82 and 83 are energy consumption components (electric home appliances), the fourth component 84 is an energy metering component (smart meter), and the fifth component 85 is a component that constitutes the UAN. The components may communicate with each other by means of a communication unit. In the network system illustrated in Fig. 8, each of the components is directly connected to the first component 70 to communicate with the first component 70. However, in a case where each of the components 82, 83, 84 and 85 is connected to new components to communicate with the new components, the network system may be extended and operated by the new components.

The second and third components 82 and 83 may be the same kind of component or different kinds of components. In this embodiment, it will be described as an example that the second and third components 82 and 83 are different kinds of energy consumption components.

The first component 70 may simply transmit information received from the fourth component 84 and/or the fifth component 85 to the second component 82 and/or the third component 83, or may process the received information and transmit the processed information.

The first component 70 may simply transmit information received from the second component 82 and/or the third component 83 to the fourth component 84 and/or the fifth component 85 (a signal may be converted), or may process the received information and transmit the processed information (the information is converted.

The first component 70 includes a communication unit 760 for performing communication with another component, a central manager 710 for managing the entire operation and/or information processing of the first component, and an application programming interface 720 (hereinafter, referred to as an 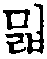 PI? for performing an interface between the communication unit 760 and the central manager 710 (specifically, application software).

The communication unit 760 includes a first communication part 762 for performing communication with the second and third components 82 and 83, a second communication part 764 for performing communication with the fourth component 84, and a third communication part 766 for performing communication with the fifth component 85.

In this instance, the first and second communication parts 762 and 764 may use different communication protocols from each other. As an example, the first communication part 762 may use Zigbee and the second communication part 764 may use Wi-fi. In this embodiment, the kind of communication protocol or method used by the first and second communication parts 762 and 764 is not limited. The third communication component 766 may use Internet communication as an example.

The API 720 includes a first API 722, a second API 724 and a third API 726. The third API 726 is an interface between the central manager 710 and the third communication part 766, and the first API 722 is an interface between the first communication part 762 and the central manager 710. The second API 724 is an interface between the second communication part 762 and the central manager 710.

The first component 70 further includes a local manager 740 and an interpreter 750. In a case where the information to be transmitted/received between the API 720 and the communication unit 760 is information related to operations of energy consumption components (electric home appliances), the local manager 740 outputs information corresponding to the respective energy consumption components. The interpreter 750 interprets information transmitted from the local manager 740 to the communication unit 760 or information received in the communication unit 760. The information outputted from the interpreter 750 is used to set or get values of information related to the respective energy consumption components.

The local manager 740 includes a memory (not shown) in which information related to one or more energy consumption components is stored. Alternatively, the local manager 740 may be connected to a memory in which information related to one or more energy consumption components is stored. The information related to each of the energy consumption components may include operation information of each of the energy consumption components and information for controlling the energy consumption components. The information related to each of the energy consumption components may further include software download information for operating each of the energy consumption components and information for remote controlling/monitoring.

As an example, in a case where a plurality of energy consumption components include a washing machine, a refrigerator and a cooking appliance, information related to each of the energy consumption components is stored in the memory. The information related to each of the energy consumption components may be changed as components connected to the network system are changed.

If a signal is transmitted from the API 720 to the local manager 740, information corresponding to a specific energy consumption component is outputted. In a case where a plurality of energy consumption components exist, information on the plurality of energy consumption components is outputted. The interpreter 750 interprets the information transmitted from the local manager 740 into a machine language so as to transmit the information to the energy consumption components. The machine language may be a signal used to set or get the operation information of the energy consumption components.

The information transmission process in the first component 70 will be described.

As an example, the first component 70 may receive energy information (e.g., an energy reduction signal: first command) from the forth component 45 through the second communication part 764. The received energy information is transmitted to the central manager 710 through the second API 724. In the process of information transmission between the second API 724 and the central manager 710, only a signal including the information is converted, and the content of the information is not converted.

Since the energy information is information related to the energy consumption reduction of the energy consumption components, the central manager 710 transmits information (second command) related to operations of the energy consumption components to the API 720. As an example, the central manager 710 transmits information necessary for turning off power of the washing machine or refrigerator.

Then, the information is transmitted from the first API 722 to the local manager 740.

The local manager 740 transmits information (third command) for controlling the operation of each of the energy consumption components to the interpreter 750 based on the information transmitted from the first API 722. As an example, in a case where the information transmitted from the first API 722 is information having different kinds of energy consumption components as targets, the local manager 740 transmits information related to the control of each of the energy consumption components to the interpreter 750. In this case, since the local manager 740 receives the second command and outputs the third command, the information inputted to the local manager 740 is converted and outputted by the local manager 740.

Subsequently, the interpreter 750 interprets the information transmitted from the local manager 740 into a machine language (signal). Then, the converted signal is transmitted to the target energy consumption components (second and third components) through the first communication part 762. Then, the energy consumption components (second and third components) are finally turned off so as to reduce energy.

Although it has been described above that the first component receives information through the second communication part, the first component may receive information through the third component so that the information related to the energy consumption components is outputted.

Meanwhile, the second and third components 82 and 83 may transmit their own operation information to the first component 70. Since the information transmitted from the second and third components 82 and 83 is information related to operations of the energy consumption components, the signal received in the first communication part 762 is transmitted to the central manager 710 via the interpreter 750, the local manager 760 and the first API 722. In such an information transmission process, the information related to the second and third components 82 and 83 is stored in the local manager 740. In this embodiment, since the information related to the energy consumption components is stored in the local manager, the local manager may be understood as a virtual energy consumption component (abstraction model).

The central manager 710 may transmit the received information to the second communication part 764 and/or the third communication part 766.

The operation of the first component will be described. The information received through the communication unit 760 may be transmitted directly to the API 720, or may be converted (via the interpreter and the local manager) and then transmitted to the API 720, based on the kind of information (or the type of signal).

The information transmitted from the central manager 740 may be transmitted directly to the communication unit 760, or may be converted and then transmitted to the communication unit 760.

As another example, the interpreter may be included in the local manager 740, and the information received through the communication unit 760 is transmitted to the local manager 740. However, converted information may be outputted, or information may be outputted as it is without converting the information.

Meanwhile, in a case where the information transmitted to the API 720 through the second or third communication part 764 or 766 is information (raw data or refined data) related to time-based pricing, the central manager 710 determines the presence of on-peak time. In the case of the on-peak time, the central manager 710 may transmit the information (first command) for controlling the operations of the energy consumption components to the API 720. Then, the information is converted through the local manager 740, and the converted information (second command) is transmitted to the energy consumption components through the first communication part 762. Alternatively, the central manager 710 may transmit the information related to the time-based pricing to the first communication part 762 through the second API 724 without determining the presence of on-peak time. In this case, the information may be converted or not converted. That is, in a case where the central manager directly receives first information (raw data), it may transmit the first information as it is, or convert the first information into a second information (refined data) and then transmit the second information.

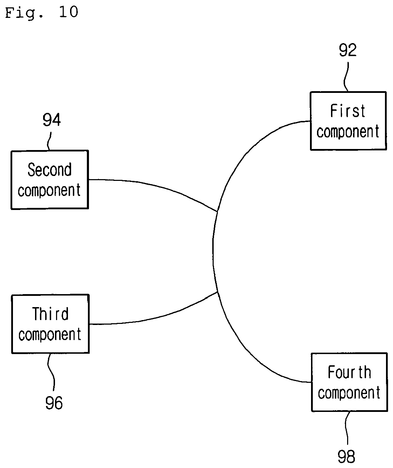

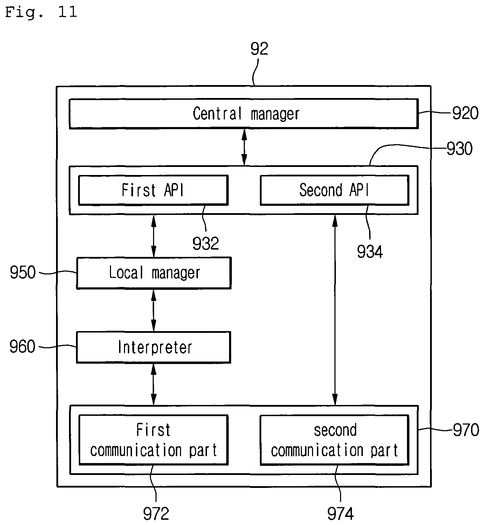

Fig. 10 is a view showing the communication structure of components that constitute the network system according to a fourth embodiment. Fig. 11 is a block diagram showing the detailed configuration of a first component in Fig. 10.

Referring to Figs. 10 and 11, the network system of this embodiment may include at least first to fourth components 92, 94, 96 and 98.

The first component 92 may communicate with the second to fourth components 94, 96 and 98. The fourth component 98 may communicate with the first to third components 92, 94 and 96.

Hereinafter, it will be described as an example that the first component 92 is a central management component (home server), the second and third components 94 and 96 are energy consumption components (electric home appliances), and the fourth component 98 is an energy metering component (smart meter).

The central management component (home server) may be understood as a component necessary for controlling at least a component that constitutes the HAN 20.

The first component 92 includes a communication unit 970 for performing communication with another component, a central manager 920 for managing the entire operation and/or information transmission/reception of the first component 92, and an application programming interface 930 (hereinafter, referred to as an "API") that serves as an interface between the communication unit 970 and the central manager 920 (specifically, application software).

The communication unit 970 may include a first communication component 972 for performing communication with the second to fourth components 94, 96 and 98, and a second communication component 974 for performing Internet communication.

The API 930 includes a first API 932 and a second API 934. The second API 934 is an interface between the central manager 920 and the second communication part 974, and the first API 930 is an interface between the first communication part 972 and the central manager 920.

The first component 92 further includes a local manager 950 and an interpreter 960. In a case where the information to be transmitted/received between the API 932 and the communication unit 970 is information related to operations of energy consumption components (electric home appliances), the local manager 950 outputs information corresponding to the respective energy consumption components. The interpreter 960 interprets information transmitted from the local manager 950 to the communication unit 970 or information received in the communication unit 970.

In this embodiment, the functions of the interpreter and the local manager are identical to those of the third embodiment, and therefore, their detailed descriptions will be omitted.

The information transmission process in the first component 92 will be described.

As an example, the first component 92 may receive energy information (e.g., energy reduction signal) from the fourth component 98 through the first communication part 972. Alternatively, the first component 92 may receive energy information from an external component connected to Internet through the second communication part 974.

The received energy information is transmitted directly to the first or second API 932 or 934 and then transmitted to the central manager 920. Since the energy information is information related to the energy consumption reduction of the energy consumption components, the central manager 920 transmits information related to the operations of the energy consumption components to the first API 932. As an example, the central manager 920 transmits information necessary for turning off power of a washing machine or refrigerator.

Then, the information is transmitted from the first API 932 to the local manager 950.

The local manager 950 transmits information for controlling the operation of each of the energy consumption components to the interpreter 960 based on the information transmitted from the first API 932. As an example, in a case where the information transmitted from the first API is information related to different kinds of energy consumption components, the local manager 950 transmits information related to the control of each of the energy consumption components to the interpreter 960.

Subsequently, the interpreter 960 interprets the information transmitted from the local manager 960 into a machine language (signal). Then, the interpreted signal is transmitted to the energy consumption components through the first communication part 972. Then, the energy consumption components are finally turned off so as to reduce energy.

Meanwhile, the second and third components 94 and 96 may transmit their own operation information to the first component 92. Since the information transmitted from the second and third components is information related to the operations of the energy consumption components, the signal received in the first communication part 972 is transmitted to the central manager 920 via the interpreter 960, the local manager 950 and the first API 932. In such an information transmission process, the information related to the first and second components is stored in the local manager 950.

The central manager 920 may transmit the received information to the first communication part 972. Then, the information of the second and third components 94 and 96 is transmitted to the fourth component 98.

The operation of the first component will be described. The information received through the communication unit 970 may be transmitted directly to the API 930, or may be converted (via the interpreter and the local manager) and then transmitted to the API 930, based on the kind of information (or the type of signal).

On the contrary, the information transmitted from the central manager 920 may be transmitted directly to the communication unit 970, or may be converted and then transmitted to the communication unit 970.

Meanwhile, in a case where the information transmitted to the API 930 through the second communication part 974 is information related to time-based pricing, the central manager 920 determines the presence of on-peak time. In the case of the on-peak time, the central manager 920 may transmit the information for controlling the operations of the energy consumption components to the API 930. Then, the information is transmitted to the energy consumption components through the local manager, the interpreter and the first communication part. In this case, the first component may be understood as an energy management component.

Although it has been described above that two energy consumption components communicate with the first component, the number of energy consumption components that communicate with the first component is not limited.

Although it has been described as an example that the first component is a home server, the first component may be an energy management component. In this case, the fourth component may be a central management component, an energy management component, a smart meter, or the like.

As another example, the first component may be a smart meter. In this case, the fourth component may be a central management component, an energy management component, or the like.

As still another example, the first component may be a terminal component (e.g., a gate way).

As still another example, each of the second and third components may be an energy generation component, an energy storage component or the like, which constitutes the HAN. That is, one or more of the energy generation component, the energy consumption component and the energy storage component may communicate with the first component. In addition to information related to the energy consumption component, information related to the energy generation component (e.g., information related to the operation of the energy generation component) and information related to the energy storage component (e.g., information related to the operation of the energy storage component) may be stored in the memory included in a local network or connected to the local network.

Although it has been described above that the first component performs Internet communication, the Internet communication may not be performed.

Although it has been described in the first embodiment that a single local manager is provided, a plurality of local managers may be provided. As an example, a first local manager may process information on an electric home appliance such as a refrigerator or washing machine, and a second local manager may process information on a display product such as a television or monitor.

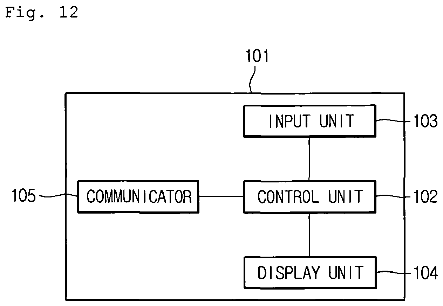

Fig. 12 is a block diagram showing an example an example of a component that constitutes the network system of the present disclosure. The following component 100 may be one component of the UAN or HAN.

Referring to Fig. 12, the component 101 may include a control unit 102, an input unit 103 for inputting an operational command, and a display unit 104 for displaying information. In this instance, the input unit 103 may be provided in the form of a touch screen to the display unit 104. The control unit 102 may communicate with a communicator 105.

The component 100 may further include a sensor, a driver, a memory and the like according to the kind of the component 100. The input unit or display unit may not be provided to the component 100 according to the kind of the component 100. The component 100 may be a function performing component, or may include the function performing component.

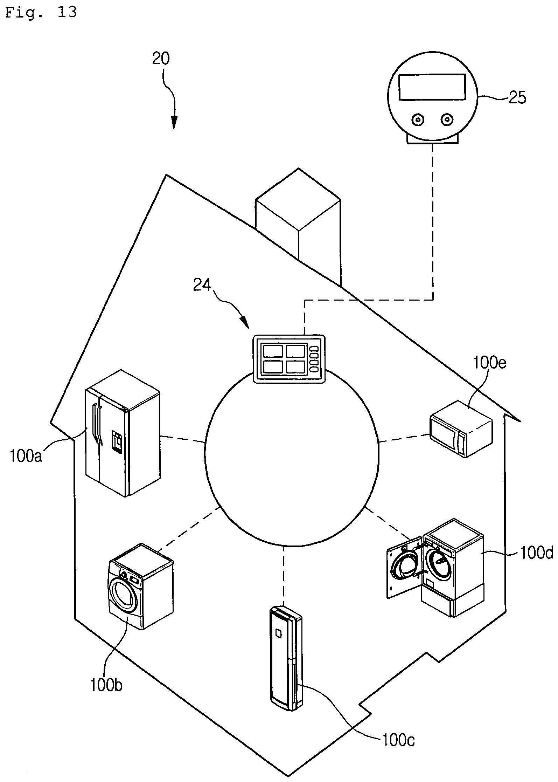

Fig. 13 is a schematic view illustrating a home network according to an embodiment.

Referring to Fig. 13, a home network 20 according to an embodiment includes an energy measurement unit 25 (e.g., a smart meter) capable of measuring the cost of power and/or electricity, being supplied to each home, in real-time from the utility network 10, and an energy management unit 24 connected to the energy measurement unit 25 and an electric product and controlling the operation thereof.

The energy management unit 24 is connected to electric products, the energy consumption units 26, such as a refrigerator 100a, a washing machine 100b, an air conditioner 100c, a drying machine 100d, and a cooking appliance 100e through an in-house network for two-way communication. In-house communication may be performed by wireless communication such as Zigbee, WiFi or the like or by wire communication such as power line communication (PLC). Furthermore, the electric products may be connected to each other so as to communicate with each other.

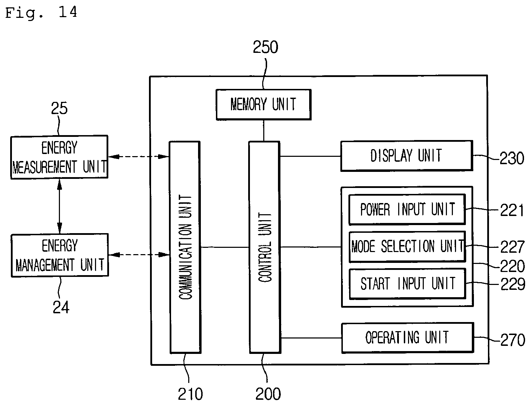

Fig. 14 is a block diagram illustrating a configuration of an electrical product according to an embodiment of the present invention.

Referring to Fig. 14, as an "energy consumption unit" according to an embodiment of the present invention, a communication unit 210 is included in the electrical product 100. The electrical product 100 may include the refrigerator 100a, the washing machine 100b, the air conditioner 100c, the drier 100d, and the cooking appliance 100e.

The communication unit 210 may communicate with at least one of an energy measurement unit 25 for recognizing energy information or additional information other than the energy information and an energy management unit 24 for managing (controlling) the driving of the electrical product 100 according to the energy information or the additional information. The energy measurement unit 25 and the energy management unit 24 may be connected to each other for mutual communication. Also, the communication unit 210 may be provided in the electrical product 100, or may be detachable from the electrical product 100.

The electrical product 100 includes an input unit 220 for inputting a predetermined command, a display unit 230 for displaying driving information of the electrical product 100 or information recognized from the communication unit 210, a memory unit 250 for storing the received information, that is, energy information (for example, energy rate information) or additional information (for example, environment information), and a control unit 200 for controlling these components.

The input unit 220 includes a power input unit 221 for inputting a power of the electrical product 100, a mode selection unit 227 for selecting a driving mode of the electrical product 100, and a start input unit 229 for inputting a driving start of the electrical product 400.

The mode selection unit 227 includes a normal mode selection unit and a power saving mode selection unit. The power saving mode selection unit includes a rate reduction mode for reducing a usage rate of the electrical product 100 and an energy saving mode for reducing an energy usage of the electrical product 100.

The "driving mode" of the electrical product 100 is determined depending on whether the electrical product 100 is driven based on energy information, and is divided into a normal mode and a power saving mode in a broader sense. The normal mode is that the electrical product 100 is driven without realizing energy information, and the power saving mode is that the electrical product 400 is driven based on the energy information.

The power saving mode may be selected in advance manually or automatically before the driving start of the electrical product 100. That is, a user may select a power saving mode through an input of the power saving selection unit, or when the electrical product 100 is turned on, the power saving mode may be automatically selected. Of course, even when the power saving mode is automatically selected, a user may change the driving mode into the normal mode later.

The power saving mode may include a selectable rate reduction mode and energy saving mode. A user may select and input one of the selectable rate reduction mode and the energy saving mode. On the other hand, the rate reduction mode or the energy saving mode may be set as a basic mode. However, the power saving mode itself may be configured to reduce a usage rate or energy use without the additional rate reduction mode and energy reduction mode.

The driving type (information) of the electrical product 100 may be understood as the minimum information necessary for driving the electrical product 100. As one example, the driving type may include a driving time (period) or a driving course of the electrical product 100. Here, the "driving course" may be understood as a predetermined method for performing a function of a component constituting the electrical product 100 or the electrical product 100 itself. The driving type may be manually inputted by a user or may be set in advance.

As one example, even if the driving type of the electrical product 100 is not additionally inputted, a basic driving type of the electrical product 100 may be set in advance. As one example, if the electrical product 100 is a washing machine, the condition "standard course and 1 hr" may be set basically when the washing machine is turned on. A user confirms it and inputs only a "confirm button" to perform washing. In summary, the driving type of the electrical product 100 may be manually or automatically recognized.

Thus, without recognition on the energy information, in order for the driving of the electrical product 100, the driving type set by a user input or automatically is called a "first driving type". That is, the first driving type is a driving type set manually or automatically according to a normal mode.

When the electrical product 100 receives the low price information, it may be driven with the first driving type that a user wants without limitations. However, when the electrical product 100 receives the high price information, this may cause problems if the electrical product 100 is driven with the first driving type. As one example, when the price of currently-supplied energy is very expensive and the first driving type uses a high output course, or when there are a larger number of mutual-matching intervals between the driving periods of the electrical product 100 and high cost periods, there are disadvantages in terms of usage rates.

Accordingly, even if the electrical product 100 recognizes the first driving type manually or automatically, on the basis of information on whether an energy rate is high or low, that is, information on high and low energy rate (high price or low price information), the first driving type may be changed into a second driving type having a less usage rate or a more energy reduction.

In brief, the electrical product 100 may perform a driving type having a less electricity usage amount or electricity rate than a recognized driving type, i.e. a "power saving driving type". The power saving driving type may be understood as a type for saving power by changing a driving time or driving course of an electrical product itself or a component constituting an electrical product. Hereinafter, the electrical product or a component constituting the electrical product is named as a "component".

As one example, the power saving driving type may include a type for adjusting (increasing, maintaining, or reducing) an output of an entire electrical product or a component or a type for shifting a driving period. Such a power saving driving type may be set in advance.

The electrical product 100 includes an operating unit 270 for operating to perform a function of the electrical product 100. The operating unit 270 may be the electrical product 100 itself or a component constituting the electrical product 100. When high price information is recognized, the driving of the operating unit 270 may be controlled according to the power saving driving type

As one example, it is recognized whether a time interval at which high price information is recognized (hereinafter, referred to as a "high price interval") is included in as least some of the driving intervals of a component. If the high price interval is included in some intervals of the driving intervals of the component, the electrical product or the component may perform power saving driving in a corresponding high price interval or an entire driving interval. However, if a specific condition is recognized, the performing of the power saving driving may be limited. The specific condition includes a case that when power saving driving is performed, a function performance or function maintenance of the component is limited.

Here, the "function" may be understood as a target function that the electrical product 100 or the component tries to achieve. As one example, the target function may include a temperature value of a specific space. In more detail, the temperature value of the specific space may include a set storage container temperature of a refrigerator or a set cooking container temperature of a cooking appliance.

The target function may include a temperature value of a circulating medium. In more detail, the temperature value of the circulating medium may include a set washing water temperature of a washing machine or a set hot air temperature of a drier. The target function may include a function for maintaining a set charging amount of a storage battery. Moreover, the target function may include a function for maintaining a set RPM of a motor or a compressor, a set heat amount of a heater, a set charging amount of a battery.

Whether to limit a function performance (maintenance) of the component may be determined depending on whether a state information value of the component is out of a setting range. The state information value may include a specific state value of the component, that is, a temperature value, a charging amount, RPM, or a heat amount. Moreover, the setting range may be understood as a minimum limit range for maintaining a function of the component. That is, the setting range is a range that the component needs to satisfy in order to perform an original function.

Accordingly, if the state information value does not satisfy the setting range, limitation is made on performing an original function of the component. In this case, the component does not perform the driving according to a power saving mode (hereinafter, a power saving driving) and the driving according to a normal mode (hereinafter, a normal driving). The normal driving, as mentioned above, is understood as being driven without the basis of energy information and with a driving type (a driving course or a driving time) set in the electrical product 100.

Whether to limit a function maintenance of the component may be determined before or while the power saving driving of the component is performed. Hereinafter, a control method according to the determination timing of whether to limit a function maintenance of the component will be described.

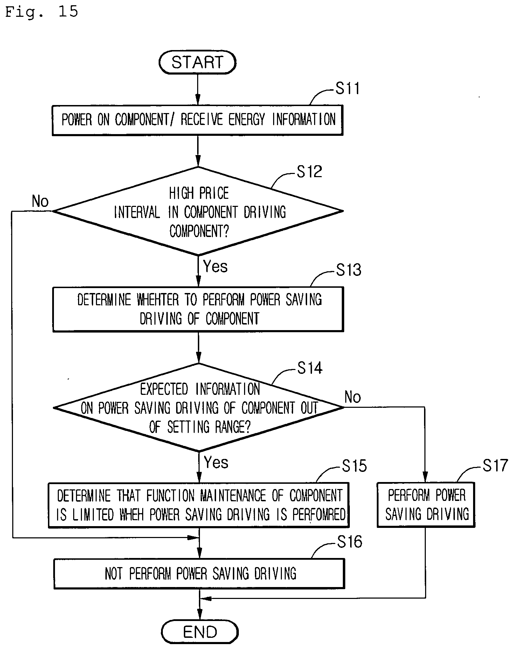

Fig. 15 is a flowchart illustrating a control method of an electrical product according to an embodiment of the present invention. This embodiment provides a control method of when whether to perform power saving driving is determined before the power saving driving of the component is performed.

When the component is turned on, a predetermined driving type is recognized. The driving type may be manually or automatically recognized, and may include driving course or driving interval information. Also, the component may receive energy information or additional information in operation S11. Whether a high price interval is included in the driving interval of the component is recognized from the received energy information or additional information in operation S12.

If the high price interval is included in the driving interval of the component, a driving type is recognized according to a power saving mode, and it is determined whether the component performs power saving driving in operation S13.

For this, whether expected information of when the component performs power saving driving (hereinafter, "power saving driving expected information") is out of a setting range is recognized. That is, when the power saving driving is performed, whether a state information value of the component is out of a setting range is recognized. The power saving driving expected information may include information on the overlapping size between the driving periods of the component and high price intervals or whether a function of the component is deteriorated during power saving driving.

As mentioned above, the state information value may be a predetermined value (a temperature value, a charging amount, RPM, or a heat amount), which may be measured or detected while the component is driven. Also, the setting range may be a minimum limit range for maintaining a function of the component. When the state information value is out of the setting range, it is determined that the function maintenance of the component is limited during a power saving driving process in operation S15.

In this case, the component does not perform power saving driving, and may perform normal driving without the basis of an energy rate. That is, if the power saving driving is not performed, the component may be driven while maintaining a set output or a set driving period in operation S16.

On the other hand, when the state information value is out of the setting range, it is determined that the function maintenance of the component is not limited during a power saving driving process. Accordingly, the component may perform power saving driving. As one example, the component may adjust (increase, maintain, or reduce) an output and may shift a driving period. Here, the shifting of the driving period may include pre-driving or delay driving in operation S17.

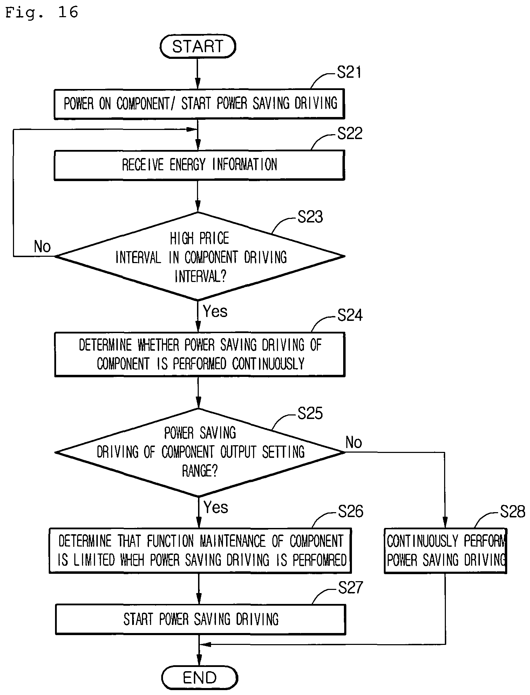

Fig. 16 is a flowchart illustrating a control method of an electrical product according to another embodiment of the present invention. This embodiment provides a control method of when whether to release power saving driving is determined while the power saving driving of the component is performed.

When the component is turned on, a predetermined driving type is recognized. The driving type may be a type according to a power saving mode. Also, the component may start power saving driving according to a recognized driving type in operation S21. Also, the component may receive energy information or additional information in operation S22.

Whether a high price interval is included in the driving interval of the component is recognized from the received energy information or additional information in operation S23. If the high price interval is included in the driving interval of the component, whether to perform the power saving driving of the component continuously is determined in operation S24.

That is, when the power saving driving is performed, whether a state information value of the component is out of a setting range is recognized. That is, when the power saving driving is performed continuously, whether a state information value of the component is out of a setting range is recognized. The power saving driving information may include information on the overlapping size between the driving periods of the component and high price intervals or whether a function of the component is deteriorated during power saving driving in operation S25.

When the state information value is out of the setting range, it is determined that the function maintenance of the component is limited during a power saving driving process in operation S26. Accordingly, the component may stop the power saving driving, and then may perform normal driving without the basis of an energy rate. That is, if the power saving driving is not performed, the component may be driven while maintaining a set output or a set driving period in operation S27.

On the other hand, when the state information value is within the setting range, it is determined that the function maintenance of the component is not limited during a power saving driving process. Accordingly, the component may perform the power saving driving continuously. As one example, the component may adjust (increase, maintain, or reduce) an output and may shift a driving period. Here, the shifting of the driving period may include pre-driving or delay driving in operation S28.

Hereinafter, another embodiment of the present invention will be described. Since there is a difference between this embodiment and the above embodiments in that power saving driving is manually released or is not performed, this difference will be mainly described, and the descriptions and reference numerals of the previous embodiments are invoked with respect to the same part.

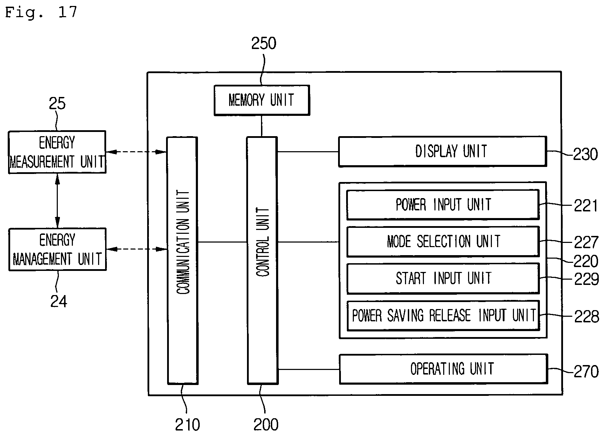

Fig. 17 is a block diagram illustrating a configuration of an electrical product according to another embodiment of the present invention.

Referring to Fig. 16, the electrical product 100 includes an input available power saving release input unit 228 for not performing or releasing (stopping) the power saving driving of the electrical product 100. The power saving release input unit 228 may be configured as a separate input unit from the power input unit 221, the mode selection unit 227, and the start input unit 229, and may be configured as the same mechanical component as at least one of the input units 221, 227, and 229. When an output of the power saving release input unit 228 is necessary, the power saving release input unit 228 may be activated or blink to allow a user to recognize it easily. The power saving release input unit 228 may be equipped with an input button or screen touch type.

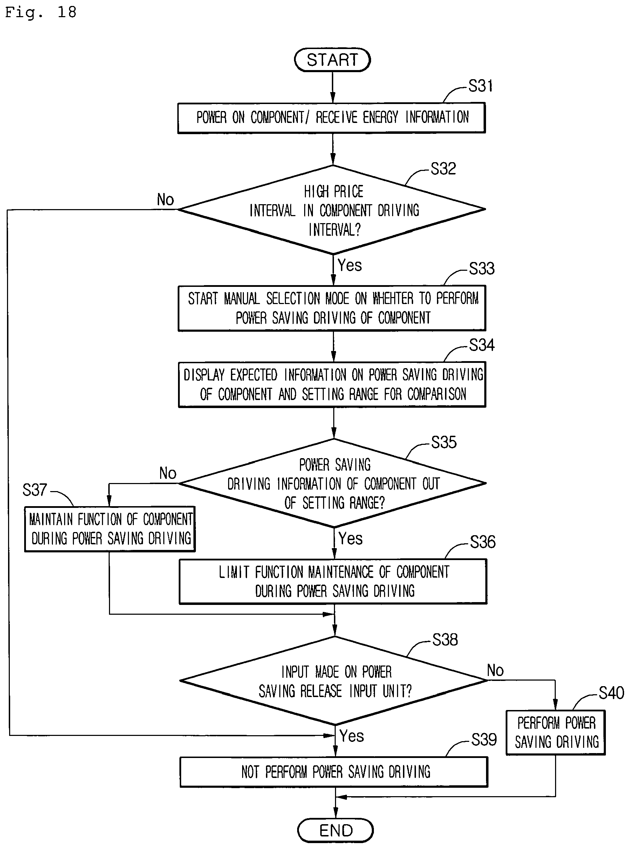

Fig. 18 is a flowchart illustrating a control method of an electrical product according to another embodiment of the present invention. This embodiment provides a control method of when whether to perform power saving driving is selected manually before the power saving driving of the component is performed.

When the component is turned on, a predetermined driving type is recognized. The driving type may be manually or automatically recognized, and may include driving course or driving interval information. Also, the component may receive energy information or additional information in operation S31. Whether a high price interval is included in the driving interval of the component is recognized from the received energy information or additional information in operation S32.

If the high price interval is included in the driving interval of the component, a driving type is recognized according to a power saving mode, and it is determined whether the component performs power saving driving in operation S33. The power saving driving expected information and setting range of the component may be displayed for comparison. A user may confirm information displayed in operation S34.

Whether the power saving driving expected information of the component is out of a setting range is recognized. If the power saving driving expected information is out of the setting range, when the component performs power saving driving, it is recognized that the function maintenance of the component is limited in operation S36.

On the other hand, if the power saving driving expected information is within the setting range, even when the component performs power saving driving, it is recognized that the function maintenance of the component is maintained in operation S37. As mentioned above, the power saving driving expected information, i.e. a state information value, may be a predetermined value (a temperature value, a charging amount, RPM, or a heat amount), which may be measured or detected while the component is driven. Also, the setting range may be a minimum limit range for maintaining a function of the component.

Whether an input is made on the power saving release input unit 228 is recognized. While the power saving driving expected information and setting range of the component are displayed for comparison, the power saving release input unit 228 may be activated. A user may determine whether to select the activated power saving release input unit 228. When an input is made on the power saving release input unit 228, it is recognized that a user does not want the power saving driving of the component, so that the power saving driving is not performed.

On the other hand, when an input is not made on the power saving release input unit 228, the component performs power saving driving. Whether an input is made on the power saving release input unit 228 is determined based on whether the power saving release input unit 228 is manipulated within a setting time. When an input is not made on the power saving release input unit 228 within the setting time, the power saving driving may be performed in operation S40. In this way, when a high price interval is included in a component driving interval, a user may set whether to perform the power saving driving, so that easy of use may be increased and an energy rate may be reduced.

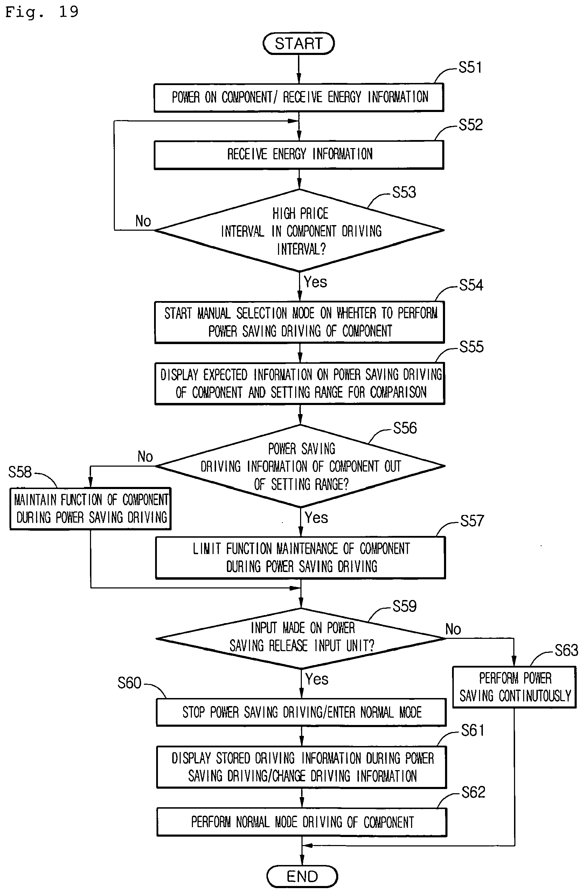

Fig. 19 is a flowchart illustrating a control method of an electrical product according to another embodiment of the present invention. This embodiment provides a control method of when whether to limit the function maintenance is determined while the power saving driving of the component is performed.

When the component is turned on, a predetermined driving type is recognized. The driving type may be a type according to a power saving mode. Also, the component may start power saving driving according to a recognized driving type in operation S51. Also, the component may receive energy information or additional information in operation S52. Whether a high price interval is included in the driving interval of the component is recognized from the received energy in operation S53.

If the high price interval is included in the driving interval of the component, a manual selection mode on whether the component performs the power saving driving may start in operation S54. The power saving driving information and setting range of the component may be displayed for comparison. A user may confirm information displayed in operation S55. Whether the power saving driving information of the component is out of a setting range is recognized in operation S56. If the power saving driving information is out of the setting range, when the component performs power saving driving, it is recognized that the function maintenance of the component is limited in operation S57.

On the other hand, if the power saving driving information is within the setting range, even when the component performs power saving driving, it is recognized that the function maintenance of the component is maintained in operation S58.

Whether an input is made on the power saving release input unit 228 is recognized in operation 59. When an input is made on the power saving release input unit 228, it is recognized that a user does not want the power saving driving of the component, so that the power saving driving is stopped and enters a normal mode. As mentioned above, it is understood that the driving type of the normal mode is determined without the basis of energy information and the component is driven according thereto in operation S60.

Also, before the power saving driving of the component is stopped, driving information stored during the power saving driving may be displayed on the display unit 230. A user may change the driving information on the component on the basis of the contents displayed on the display unit 230.

Of course, a range in which the driving information is changed is within the setting range, and the display unit 230 may guide a user to change the driving information to be within the setting range in operation S61. The component may be driven according to the changed driving information or the driving information corresponding to the normal mode in operation S62.

On the other hand, when an input is not made on the power saving release input unit 228, the component performs power saving driving continuously. Whether an input is made on the power saving release input unit 228 is determined based on whether the power saving release input unit 228 is manipulated within a setting time in operation S63. In this way, when a high price interval is included in a component driving interval during the power saving driving of the component, a user may set whether to stop the power saving driving, so that easy of use may be increased and an energy rate may be reduced.

Another embodiment is suggested.

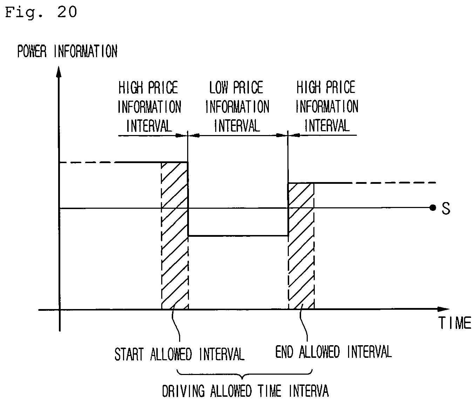

Fig. 20 is a view when power information is used for a control method of an electrical product according to an embodiment of the present invention. Referring to 6, the power information provides electricity rate information varying with time. However, the electricity rate is just one example of power information. Additionally, various forms of data may be received as power information as long as an On-Peak time interval at which power demand is concentrated and an Off-Peak time interval at which power demand is less concentrated are distinguished from each other. The On-Peak time interval may be understood as one example of a high price information interval, and the Off-Peak time interval may be understood as one example of a low price information interval.

The high price information interval (or the On-Peak time interval) may be defined as a time interval at which an electricity rate exceeds a predetermined value S, and the low price information interval (or the Off-Peak time interval) may be defined as a time interval at which an electricity rate is less than the predetermined value S.

The predetermined value S may be defined in various forms, and its example includes an electricity rate average value provided from the power information, an electricity rate average value after an execution scheduled time of an electrical product, and an average value of the maximum value and the minimum value of an electricity rate after an execution scheduled time of an electrical product. Additionally, the predetermined value S, which is not a value calculated through the power information, may be defined in such a way that a user or a control unit of an electrical product sets an arbitrary electricity rate.

When looking at the example of the power information shown in Fig. 6, in order to relive the power demand concentration and save an electricity rate, an electrical product may be driven only at a low price information interval.

However, in relation to an operation mode of an electrical product, its start and end may not be completed in the low price information interval. In this case, the remaining cycles of the operation mode, which are not completed in the low price information interval, may be controlled to be delayed to the next low price information interval.

That is, the operation mode of an electrical product may be set to perform a single cycle, but a plurality of cycles are generally provided in a combined form with a predetermined order. Accordingly, the first cycle in the operation mode is controlled to start from the low price information interval but the remaining cycles at the end of the low price information interval are controlled to be executed at the next low price information interval. By doing so, reduction of an electricity rate and elimination of power demand concentration may be obtained from the standpoint of an electrical product's user or power supply source. However, controlling of an electrical product to be driven only at a low price information interval may deteriorate electrical product's convenience.

A plurality of cycles set in an operation mode are combined according to a predetermined order, and when continuity is guaranteed in the combined order, the performance that an electrical product intends may be demonstrated. Accordingly, when the continuity of cycles is ignored and an electrical product is controlled in order to simply drive the electrical product only at an Off-Peak time interval, the performance of the electrical product may be deteriorated or a selected operation mode may not be completed within the time that a user wants.

Accordingly, the present invention controls an electrical product to be driven in a low price information interval, and also drives an electrical product if there is a driving allowed time interval in a high cost information interval before and after a low cost information interval, in order to resolve the above issues.

The driving allowed time interval is a time interval in a high cost information interval and is divided into a start allowed interval, which allows an electrical product to be driven, and an end allowed interval,. The start allowed interval belongs to the high price information interval but is characteristically provided before a low price information interval, and the end allowed interval belongs to the high price information interval but is characteristically provided after the low price information interval. That is, the driving allowed time interval has a disadvantage compared to when an electrical product is driven in a low price information interval on the basis of power information such as an electricity rate. However, if the driving allowed time interval satisfies predetermined requirements, it is defined as a time interval that selectively allows the driving of the electrical product.

In more detail, when it is assumed that the driving allowed time interval drives the electrical product in a high price information interval, an expected power consumption information value (such as an electricity rate, a power consumption amount, or a driving time) may be set to a time interval less than a predetermined reference. Here, the power consumption information value means data relating to information on power that an electrical product consumes and is a concept corresponding to power information provided to an electrical product. That is, if the power information provided to an electrical product is an electricity rate, the power consumption information value means an electricity rate charged by the driving of the electrical product.

Moreover, the predetermined reference may be set to a relative value of the power consumption information value such as a predetermined percentage of a driving time (for example, a driving time set in an operation mode of an electrical product) set in the electrical product, a predetermined percentage of a power consumption amount required when an electrical product is driven during a set driving time, and a predetermined percentage of an electricity rate charged when an electrical product is driven during a set driving time.

Accordingly, the driving allowed time interval may be defined as a time interval in a high price information interval corresponding to a predetermined percentage (for example, 10%) of a total driving time set in the electrical product (if a time set in a specific operation mode of an electrical product is 100 min, it is a time interval of about 10 min).

Additionally, the driving allowed time interval may be set to a time interval at which an electricity rate charged when the electrical product is driven in a high price information interval is less than a predetermined percentage (about 10 %) of an electricity rate charged when the electrical product is driven during a driving time set in an operation mode of the electrical product (when a specific operation mode of an electrical product is executed and an electricity rate is charged with 100 WON, it is a time interval at which an electricity rate is charged with less than 10 WON in a high price information interval).

Additionally, the driving allowed time interval may be set to a time interval at which a power amount consumed when the electrical product is driven in a high price information interval is less than a predetermined percentage (about 10 %) of a power amount consumed when the electrical product is driven during a driving time set in an operation mode of the electrical product (when an expected power consumption amount is 100 Wh during an operation mode of an electrical product, it is a time interval at which a power of less than 10 Wh is consumed in a high price information interval).

Moreover, the predetermined reference may be set to a specific value of a driving time, a specific value of an electricity rate, or a specific value of a power consumption amount. In this case, the driving allowed time interval means a time interval that does not exceed a specific driving time (for example, 10 min) in a high price information interval, an electrical product's driving available time interval at which an electricity rate does not exceed a specific value (for example, 2000 WON) when an electrical product is driven in a high price information interval, and an electrical product's driving available time interval at which a power consumption amount does not exceed a specific value (10 Wh) when an electrical product is driven in a high price information interval.

Moreover, the above 'predetermined reference' may be set when a user makes an input on an electrical product, or a control unit controlling an electrical product may set the "the above predetermined reference" by itself in consideration of power information or a selected operation mode, or 'the above predetermined reference' may be set by a power supply source providing power information.

Accordingly, although the driving allowed time interval is a time interval in a high price information interval, it is a time interval at which disadvantage of an electricity rate may be minimized from the user perspective, and power demand concentration may be somewhat resolved from the power supply source perspective.

Additionally, as described above, the driving allowed time interval is a concept including a start allowed interval and an end allowed interval. Accordingly, the setting of the start allowed interval and end allowed interval may be processed based on the same reference as that of the above-mentioned driving allowed time interval. That is, the start allowed interval may be defined as a time interval at which an expected power consumption information value becomes less than a predetermined reference when an electrical product is driven in a high price information interval, and the end allowed interval may be defined as a time interval at which an expected power consumption information value becomes less than a predetermined reference when an electrical product is driven in a high price information interval.

However, in that the time allowed interval is a time interval, which is in a high price information interval but is provided before a start point of a low price information interval to start the driving of an electrical product, and the end allowed interval is a time interval, which is in a high price information interval but is provided after an end point of a low price information interval to end the driving of an electrical product, they are distinguished from each other.

Furthermore, the driving allowed time interval may be set to a time interval at which the sum of a power consumption information value (when an electrical product is driven at a start allowed interval) and a power consumption information value (when an electrical product is driven at an end allowed interval) does not exceed the above predetermined reference. In this case, the size of a start allowed interval and the size of an end allowed interval may be adjusted according to characteristics of the first and final cycles of an operation mode set in an electrical product.

Accordingly, if the first cycle of an operation mode is a cycle of large power consumption and the final cycle is a cycle of less power consumption, since the size of the start allowed interval is set to be less than that of the end allowed interval and each cycle of an operation mode is controlled to be performed continuously, driving of an electrical product may be efficiently controlled.

Since the driving allowed time interval is a time interval (a start allowed interval) of an electrical product and a time interval (an end allowed interval) in a high price information interval, the present invention provides a control method through which an electrical product starts and ends the driving in a low price information interval, a control method though which an electrical product starts the driving in a start allowed interval and ends the driving in a low price information interval, a control method through which an electrical product starts the driving in a low price information interval and ends the driving in an end allowed interval, and a control method through which an electrical product starts the driving in a start allowed interval and ends the driving in an end allowed interval.

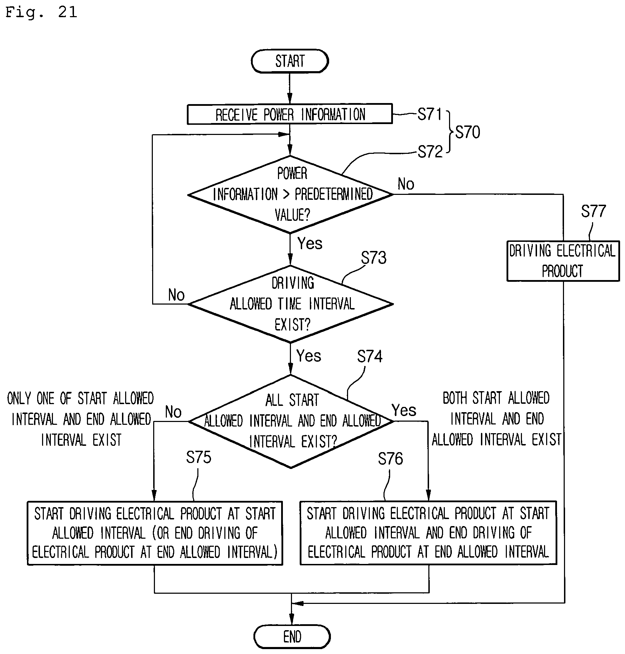

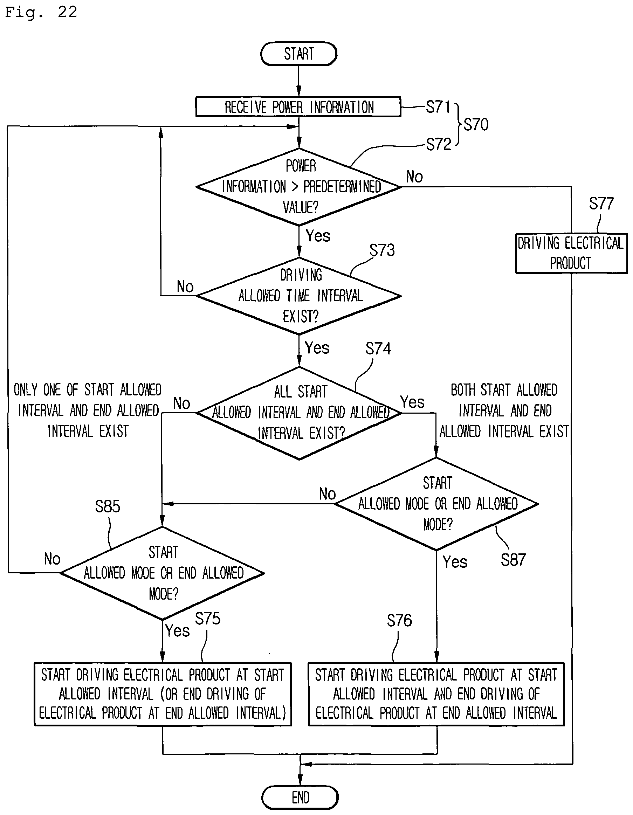

Figs. 21 and 22 are flowcharts illustrating a control method of an electrical product according to an embodiment of the present invention. Referring to Figs. 21 and 22, a control method of an electrical product receiving power information from a power supply source will be described.

The control method of the present invention receives power information and compares it with a predetermined value S (refer to Fig. 20) in order to recognize a high price information interval (for example, an On-Peak time interval) and a low price information interval (for example, an Off-Peak time interval) in operation S70.

Moreover, the recognizing the high price information interval and the low price information interval in operation S70 includes receiving, by the electrical product, power information from a power supply source in operation S71 and comparing the predetermined value S set in the electrical product with the received power information in operation S72. If the power information is provided in a form of an electricity rate, the predetermined value S may be predetermined electricity rate data inputted by a user or a control unit of an electrical product.

However, the case that the electrical product compares the power information with the predetermined value and analyzes them and, without determining a high price information interval and a low price information interval, information on the high price information interval and the low price information interval is directly provided from an external to the electrical product is not excluded. That is, a power information provider at the outside of the electrical product like a power supply source may directly provide all information on the high price information interval and the low price information interval to the electrical product.

When it is determined that the received power information is a low price information interval less than the predetermined value S, the control method of the present invention controls an electrical product to be driven in a low cost information interval in operation S77. However, when it is determined that the received power information is a high price information interval greater than the predetermined value S, the control method of the present invention determines whether a driving allowed time interval is in a high price information interval in operation S73.

The driving allowed time interval is a time interval at which the power consumption information value (an electricity rate, a power consumption amount, a driving time, etc.) expected when an electrical product is driven in the above described high price information interval is less than a predetermined reference (a predetermined percentage of an electricity rate, a specified electricity rate, etc.). Accordingly, the determining of whether there is the driving allowed time interval in operation S73 is understood as determining whether there is a time interval at which the power consumption information value (electricity rate, etc.) is less than the predetermined reference.

If there is the driving allowed time interval, the control method of the present invention includes determining whether the driving allowed time interval is a start allowed interval and whether there are a start allowed interval and an end allowed interval in operation S74. Of course, the determining of the time intervals in operation S74 may include separately determining whether the driving allowed time interval is a start allowed interval, whether there is an end allowed interval, and whether there are a start allowed interval and an end allowed interval.

The start allowed interval is in a high price information interval and is a time interval before a low price information interval. As shown in Fig. 20, the start allowed interval may be set to include an end point of a high price information interval. The end allowed interval is a high price information interval continuing from a low price information interval, and as shown in Fig. 20, may be set to include a start point of a high price information interval.

Moreover, when the driving allowed time interval includes all start allowed intervals and end allowed intervals, the control method of the present invention starts the driving of an electrical product but controls the electrical control to be stopped in the end allowed interval in operation S76.

However, if there is an start allowed interval or an end allowed interval in the driving allowed time interval in operation S74 (if NO), the control method of the present invention performs a control process below.

If the driving allowed time interval is a time allowed interval, the control method of the present invention controls an electrical product to start at the time allowed interval in operation S75, and if the driving allowed time interval is an end allowed interval, the control method of the present invention controls an electrical product to stop at the end allowed interval in operation S75. That is, when the driving allowed time is a start allowed interval, it is controlled to start the driving of an electrical product at the start allowed interval and stop the electrical product in an Off-Peak time interval. When the driving allowed time is an end allowed interval, it is controlled to start the driving of an electrical product in an Off-Peak time interval and stop the electrical product at an end allowed interval. Accordingly, the control method of the present invention drives an electrical product while minimizing disadvantage of an electricity rate during an On-Peak time interval. Furthermore, the control method of the present invention further includes determining whether it is a start allowed mode (or an end allowed mode) in operations S85 and S87 (refer to Fig. 22). The start allowed mode (or the end allowed mode) is a meaningful concept when the driving allowed time interval is set to be less than a predetermined percentage of a driving time set in an electrical product or a specific driving time.

It is assumed that a time corresponding to a predetermined percentage (for example, 10%) of a driving time set in an electrical product in a high price information interval or a specific driving time (for example, 10 min) is set as a driving allowed time interval. In this case, if an operation mode of an electrical product driven in the driving allowed time interval requires a large amount of power, although the driving allowed time interval is a relatively short time interval, it consumes a large amount of power. Therefore, it is difficult to achieve the purpose such as electricity rate reduction.

Accordingly, the determining of whether it is the start allowed mode or the end allowed mode in operations S85 and S87 is defined as determining whether a power consumption amount (or an electricity rate) is less than a predetermined reference value when an electrical product is driven in the start allowed mode or the end allowed mode.

Moreover, when there is a start allowed mode or an end allowed mode in a driving allowed time interval, if an operation mode of an electrical product is the start allowed mode or the end allowed mode, it proceeds to operation S75. But, if not, it is controlled to not to execute the operation mode of the electrical product (for example, it is controlled to execute the operation mode in an Off-Peak time interval).

However, when all the start allowed interval and the end allowed interval are included in the driving allowed time interval, if the operation of the electrical product is the start allowed mode or the end allowed mode, it proceeds to operation S76. If the operation mode of the electrical product is not the start allowed interval and the end allowed interval, it may be determined whether there is a start allowed interval or an end allowed interval in operation S85 in order to control the driving start and end of the electrical product.

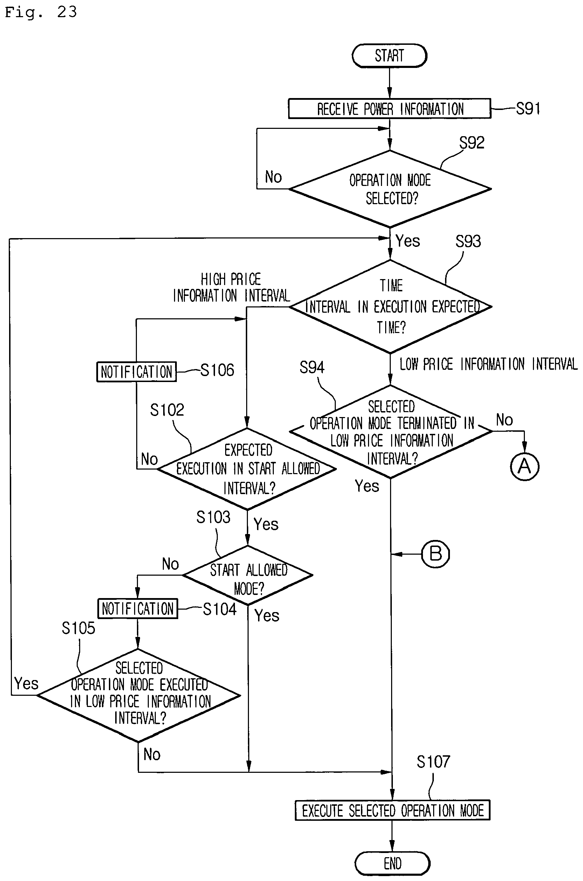

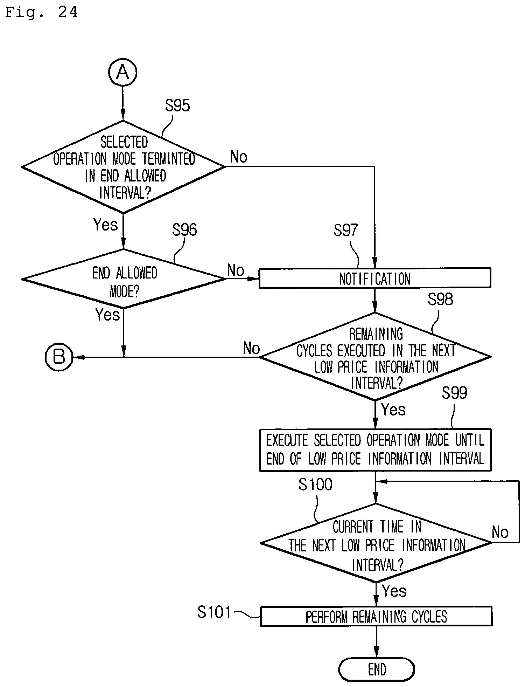

Figs. 23 and 24 are flowcharts illustrating a control method of an electrical product according to another embodiment of the present invention. Referring to Figs. 23 and 24, the control method of the present invention will be described according to another embodiment.

Like the above embodiment shown in Figs. 21 and 22, this embodiment includes receiving power information in operation S91 first, and determining whether a user selects an operation mode for driving an electrical product in operation S92. When an operation mode selection signal occurs by a user, the control method provides an optimized electrical product for each interval after determining a current time (an operation mode selection time) at which the operation mode selection signal occurs belongs to which interval among electricity rate intervals provided from the receiving of the power information in operation S91.

However, if necessary, even if a user selects an operation mode, since the selected operation mode may be executed after a predetermined time elapses (in the case of a reservation setting), it may be determined in operation S93 that the 'execution scheduled time' of the selected operation mode belongs to which time interval among electricity rate intervals provided from the receiving of the electricity rate data in operation S91, in order to control the electrical product. Hereinafter, the latter case will be mainly described for convenience of description.

The determining of the time interval that the execution scheduled time belongs in operation S93 may include determining whether an electricity rate at the execution scheduled time determined from the power information is greater or less than the predetermined value S.

When it is determined that the execution scheduled time of the selected operation mode is a high price information interval, the control method of the present invention determines whether the execution scheduled time is in a start allowed interval in operation S54.

If the execution scheduled time is in a start allowed interval, the control method of the present invention executes the operation mode that a user selects in operation S107, but if not, the operation mode that the user selects waits until the start allowed interval starts. At this point, a notification process displays time information on the beginning of the start allowed interval is performed in operation S106 in order to allow a user to recognize the reason that an operation of a corresponding electrical products does not start immediately.

The reason that an operation mode inputted to an electrical product is executed at a high price information interval at which a relatively expensive electricity rate is charged due to a lot of power demands is that since the start allowed interval is at the end of a high price information interval, power demand concentration may be somewhat resolved and a user's request to operate an electrical product may be satisfied.

Moreover, even if the execution scheduled time is in the start allowed interval, the control method of the present invention may further include determining whether the operation mode that a user selects is a 'start allowed mode' in operation S103. Here, the 'start allowed mode' may be defined as an operation mode if a power consumption amount or electricity rate expected when the operation mode is executed in the start allowed interval is less than a predetermined reference value.

That is, even if an operation mode is inputted at the start allowed interval of a high price information interval, the control method of the present invention may execute the selected operation mode in operation S107. This may increase power demand concentration because power consumption amount is large when an operation mode of an electrical product is a mode that intensively uses a heating wire such as a heater.

Moreover, even when the execution scheduled time is in the start allowed interval but is not a start allowed mode, the control method of the present invention performs a notification process to ask a user whether to execute the selected operation mode in a low price information interval in operation S104, and then executes the selected operation mode according to a user's intention.

Hereinafter, when it is determined that the time interval that the execution scheduled time belongs is a low price information interval on the basis of the determination result in operation S93, the control method of the present will be described.

If it is determined that the execution schedule time is in an Off-Peak time interval, the control method of the present invention determines whether the selected operation mode is terminated in the Off-Peak time interval in operation S94, and if it is determined that the selected operation mode is terminated in the Off-Peak time interval, the selected operation mode is immediately executed in operation S107. However, if the selected operation mode is not terminated in the Off-Peak time interval, the control method determines whether the selected operation mode is terminated in an end allowed interval in operation S95.

If the selected operation mode is terminated in an end allowed interval, the selected operation mode is executed in operation S107, or if not, a notification process (which may display time information on the next low price information interval) is performed in operation S97 in order to ask a user whether the remaining cycles are to be executed in the next low price information interval and then, the remaining cycles are performed according to a user's intention.

If the user makes a selection on executing the remaining cycles in the next low price information interval, the control method of the present invention executes the selected operation mode until the end of the low price information interval in operation S99, and performs the remaining cycles in operation S101 when the next low price information interval starts in operation S100.

Moreover, even if it is determined that the selected operation mode is terminated in the end allowed interval in operation S95, the control method of the present invention may further include determining whether the cycle executed in the end allowed interval is an end allowed mode in operation S96. Here, the 'end allowed mode' may be defined as an operation mode if a power consumption amount or electricity rate expected when the operation mode of an electrical product is executed in the end allowed interval of the high price information interval is less than a predetermined reference value (a reference power consumption amount or a reference electricity rate). This is to prevent power demand concentration at an On-Peak time interval, because power consumption amount is large when an operation mode of an electrical product is a mode that intensively uses a heating wire such as a heater.

Moreover, in the above embodiments, the driving allowed time interval was described only with respect to a start allowed interval, i.e. a time interval including the end point of a high price information interval, and an end allowed interval including the start point of a high price information interval. However, the driving allowed time interval may be provided as a partial driving allowed interval between the start allowed interval and the end allowed interval. In this case, the partial driving allowed interval may be defined as a time interval that allows the limited driving of an electrical product in a high price information interval.

It is assumed that an electrical product starts driving in a start allowed interval or a low price information interval but stops in the next low price information interval. In this case, the control method of the present invention may restrictively drive an electrical product in the partial driving allowed interval of a high price information interval before a low price information interval at which the driving of the electrical product is stopped, so that the electrical product may be driven not in a high price information interval and the driving time delay of the electrical product may be minimized.

### INDUSTRIAL APPLICABILITY

According to the network system of the embodiments, since an energy source is efficiently produced, used, distributed, and stored, an effective management of an energy source becomes possible and thus, industrial applicability is remarkable.

## Claims

1. A network system comprising:
at least one component selected from an energy receiving unit (26) receiving energy and an energy management unit (24) managing the energy receiving unit,
wherein
an energy usage amount or an energy usage rate of the energy receiving unit (26) is adjusted;
an energy usage amount or a usage rate of when the component is controlled on the basis of at least information related to energy cost is less than that of when the component is controlled without the basis of at least information related to energy cost;
the energy receiving unit (26) comprises an energy consumption unit having a normal mode and power saving mode for an operation; and
when high price information is received in relation to the energy cost, it is determined whether to perform driving according to the power saving mode of the energy consumption unit;
**characterized in that**
when the energy consumption unit performs the power saving mode and it is determined that a function maintenance of the energy consumption unit is limited, driving according to the power saving mode of the energy consumption unit is not performed;
wherein whether to limit the function maintenance of the energy consumption unit is determined based on whether an overlapping size of a driving period of the energy consumption unit and a time interval at which the high price information is recognized, is within a minimum limit range for maintaining a function of the energy consumption unit.

2. The network system according to claim 1, wherein the range is a range for a temperature value of a specific space in the energy consumption unit, a temperature value of a circulating medium, or a charging amount.

3. The network system according to claim 1, wherein the range is a range for the number of rotations, a heat amount, or a charging amount of a component constituting the energy consumption unit.

4. The network system according to claim 1, wherein whether to limit the function maintenance of the energy consumption unit is recognized before or while the energy consumption unit performs the driving according to the power saving mode.

5. The network system according to claim 4, wherein when it is recognized that the function maintenance is limited before the driving according to the power saving mode of the energy consumption unit is performed, the energy consumption unit does not perform the driving according to the power saving mode.

6. The network system according to claim 4, wherein when it is recognized that the function maintenance is limited while the driving according to the power saving mode of the energy consumption unit is performed, the energy consumption unit stops the driving according to the power saving mode.

7. The network system according to claim 1, wherein the driving according to the power saving mode is that the energy consumption unit is driven in the power saving mode on the basis of the information related to energy cost, and that a set output of the energy consumption unit is reduced, or a set driving interval is shifted.

8. The network system according to claim 1, wherein the normal mode is that the energy consumption unit is driven according to a set output or a set driving interval without the basis of the information related to energy cost; and when the driving according to the power saving mode is not performed, the energy consumption unit is driven based on the normal mode.

9. The network system according to claim 1, wherein whether to perform the driving according to the power saving mode of the energy consumption unit is manually selectable.

10. The network system according to claim 9, wherein when the high price information is received, driving information or expected driving information on the energy consumption unit and a setting range are displayed for comparison.

11. The network system according to claim 9, further comprising a power saving release input unit for inputting a command on not performing the driving according to the power saving mode of the energy consumption unit on the basis of a displayed contents.

## Patentansprüche

1. Netzwerksystem, umfassend:
mindestens eine Komponente, die aus einer Energieempfangseinheit (26), die Energie empfängt, und einer Energieverwaltungseinheit (24), die die Energieempfangseinheit verwaltet, ausgewählt ist, wobei
eine Energieverbrauchsmenge oder eine Energieverbrauchsrate der Energieempfangseinheit (26) eingestellt wird;
eine Energieverbrauchsmenge oder eine Nutzungsrate, bei der die Komponente zumindest basierend auf Energiekosten bezogenen Informationen gesteuert wird, geringer ist als die, wenn die Komponente nicht zumindest basierend auf Energiekosten bezogenen Informationen gesteuert wird;
die Energieempfangseinheit (26) eine Energieverbrauchseinheit mit einem Normalmodus und einem Energiesparmodus für einen Betrieb umfasst; und
wenn Informationen über einen hohen Preis in Bezug auf die Energiekosten empfangen werden, bestimmt wird, ob ein Ansteuern gemäß dem Energiesparmodus der Energieverbrauchseinheit durchzuführen ist;
**dadurch gekennzeichnet, dass**
wenn die Energieverbrauchseinheit den Energiesparmodus durchführt und bestimmt wird, dass eine Funktionserhaltung der Energieverbrauchseinheit begrenzt ist, ein Ansteuern gemäß dem Energiesparmodus der Energieverbrauchseinheit nicht durchgeführt wird;
wobei, ob die Funktionserhaltung der Energieverbrauchseinheit begrenzt wird oder nicht, basierend darauf bestimmt wird, ob eine überlappende Größe einer Ansteuerperiode der Energieverbrauchseinheit und ein Zeitintervall, in dem die Informationen über den hohen Preis erkannt werden, innerhalb Bereichs einer Untergrenze zum Aufrechterhalten einer Funktion der Energieverbrauchseinheit liegt.

2. Netzwerksystem nach Anspruch 1, wobei der Bereich ein Bereich für einen Temperaturwert eines bestimmten Raums in der Energieverbrauchseinheit, einen Temperaturwert eines zirkulierenden Mediums, oder eine Ladungsmenge ist.

3. Netzwerksystem nach Anspruch 1, wobei der Bereich ein Bereich für die Anzahl von Umdrehungen, eine Wärmemenge oder eine Ladungsmenge einer Komponente, die die Energieverbrauchseinheit bildet, ist.

4. Netzwerksystem nach Anspruch 1, wobei, ob die Funktionserhaltung der Energieverbrauchseinheit begrenzt wird oder nicht, erkannt wird, bevor oder während die Energieverbrauchseinheit das Ansteuern gemäß dem Energiesparmodus durchführt.

5. Netzwerksystem nach Anspruch 4, wobei, wenn erkannt wird, dass die Funktionserhaltung begrenzt ist, bevor das Ansteuern gemäß dem Energiesparmodus der Energieverbrauchseinheit durchgeführt wird, die Energieverbrauchseinheit das Ansteuern gemäß dem Energiesparmodus nicht durchführt.

6. Netzwerksystem nach Anspruch 4, wobei, wenn erkannt wird, dass die Funktionserhaltung begrenzt ist, während das Ansteuern gemäß dem Energiesparmodus der Energieverbrauchseinheit durchgeführt wird, die Energieverbrauchseinheit das Ansteuern gemäß dem Energiesparmodus stoppt.

7. Netzwerksystem nach Anspruch 1, wobei das Ansteuern gemäß dem Energiesparmodus darin besteht, dass die Energieverbrauchseinheit basierend auf den Informationen bezüglich der Energiekosten im Energiesparmodus angesteuert wird, und dass eine eingestellte Ausgabe der Energieverbrauchseinheit reduziert wird oder ein eingestelltes Ansteuerintervall verschoben wird.

8. Netzwerksystem nach Anspruch 1, wobei der Normalmodus darin besteht, dass die Energieverbrauchseinheit gemäß einer eingestellten Ausgabe oder einem eingestellten Ansteuerintervall nicht basierend auf den Informationen bezüglich der Energiekosten angesteuert wird; und wenn das Ansteuern gemäß dem Energiesparmodus nicht durchgeführt wird, die Energieverbrauchseinheit basierend auf dem Normalmodus angesteuert wird.

9. Netzwerksystem nach Anspruch 1, wobei, ob das Ansteuern gemäß dem Energiesparmodus der Energieverbrauchseinheit durchgeführt werden soll, manuell auswählbar ist.

10. Netzwerksystem nach Anspruch 9, wobei, wenn die Informationen über einen hohen Preis empfangen werden, Ansteuerinformationen oder erwartete Ansteuerinformationen über die Energieverbrauchseinheit und ein Einstellbereich zum Vergleich angezeigt werden.

11. Netzwerksystem nach Anspruch 9, ferner umfassend eine Energiesparfreigabe-Eingabeeinheit zum Eingeben eines Befehls zum Nichtdurchführen des Ansteuerns gemäß dem Energiesparmodus der Energieverbrauchseinheit basierend auf einen angezeigten Inhalt.

## Revendications

1. Système de réseau comprenant :
au moins un composant sélectionné parmi une unité réceptrice d'énergie (26) recevant de l'énergie et une unité de gestion d'énergie (24) gérant l'unité réceptrice d'énergie,
dans lequel
une quantité d'utilisation d'énergie ou un taux d'utilisation d'énergie de l'unité réceptrice d'énergie (26) est ajusté ;
une quantité d'utilisation d'énergie ou un taux d'utilisation lorsque le composant est commandé sur la base au moins d'informations relatives à un coût d'énergie est inférieur à celui lorsque le composant est commandé indépendamment au moins d'informations relatives à un coût d'énergie ;
l'unité réceptrice d'énergie (26) comprend une unité de consommation d'énergie ayant un mode normal et un mode d'économie d'énergie pour une opération ; et
lorsque des informations de tarif haut sont reçues en ce qui concerne le coût d'énergie, il est déterminé s'il faut effectuer un pilotage en fonction du mode d'économie d'énergie de l'unité de consommation d'énergie ;
**caractérisé en ce que**
lorsque l'unité de consommation d'énergie effectue le mode d'économie d'énergie et il est déterminé qu'un maintien de fonctionnement de l'unité de consommation d'énergie est limité, le pilotage en fonction du mode d'économie d'énergie de l'unité de consommation d'énergie n'est pas effectué ;
dans lequel, il est déterminé s'il faut limiter le maintien de fonctionnement de l'unité de consommation d'énergie selon qu'une taille de chevauchement d'une période de pilotage de l'unité de consommation d'énergie et d'un intervalle de temps auquel les informations de tarif haut sont reconnues est ou non à l'intérieur d'une plage de limite minimale pour le maintien d'un fonctionnement de l'unité de consommation d'énergie.

2. Système de réseau selon la revendication 1, dans lequel la plage est une plage pour une valeur de température d'un espace spécifique dans l'unité de consommation d'énergie, une valeur de température d'un milieu circulant, ou un montant de facturation.

3. Système de réseau selon la revendication 1, dans lequel la plage est une plage pour le nombre de rotations, une quantité de chaleur, ou un montant de facturation d'un composant constituant l'unité de consommation d'énergie.

4. Système de réseau selon la revendication 1, dans lequel il est reconnu s'il faut limiter le maintien de fonctionnement de l'unité de consommation d'énergie avant ou pendant l'exécution, par l'unité de consommation d'énergie, du pilotage en fonction du mode d'économie d'énergie.

5. Système de réseau selon la revendication 4, dans lequel, lorsqu'il est reconnu que le maintien de fonctionnement est limité avant l'exécution du pilotage en fonction du mode d'économie d'énergie de l'unité de consommation d'énergie, l'unité de consommation d'énergie n'effectue pas le pilotage en fonction du mode d'économie d'énergie.

6. Système de réseau selon la revendication 4, dans lequel, lorsqu'il est reconnu que le maintien de fonctionnement est limité pendant l'exécution du pilotage en fonction du mode d'économie d'énergie de l'unité de consommation d'énergie, l'unité de consommation d'énergie arrête le pilotage en fonction du mode d'économie d'énergie.

7. Système de réseau selon la revendication 1, dans lequel le pilotage en fonction du mode d'économie d'énergie est que l'unité de consommation d'énergie est pilotée dans le mode d'économie d'énergie sur la base des informations relatives à un coût d'énergie, et une sortie de consigne de l'unité de consommation d'énergie est réduite, ou un intervalle de pilotage de consigne est déplacé.

8. Système de réseau selon la revendication 1, dans lequel le mode normal est que l'unité de consommation d'énergie est pilotée en fonction d'une sortie de consigne ou d'un intervalle de pilotage de consigne indépendamment des informations relatives à un coût d'énergie ; et, lorsque le pilotage en fonction du mode d'économie d'énergie n'est pas effectué, l'unité de consommation d'énergie est pilotée sur la base du mode normal.

9. Système de réseau selon la revendication 1, dans lequel il est sélectionné manuellement s'il faut effectuer le pilotage en fonction du mode d'économie d'énergie de l'unité de consommation d'énergie.

10. Système de réseau selon la revendication 9, dans lequel, lorsque les informations de tarif haut sont reçues, des informations de pilotage ou des informations de pilotage prévues sur l'unité de consommation d'énergie et une plage de réglage sont affichées à titre de comparaison.

11. Système de réseau selon la revendication 9, comprenant en outre une unité d'entrée de libération d'économie d'énergie pour entrer une commande de non-exécution du pilotage en fonction du mode d'économie d'énergie de l'unité de consommation d'énergie sur la base d'un contenu affiché.
